(19) Europäisches Patentamt
European Patent Office
Office européen des brevets

(11) **EP 2 141 841 B1**

(12) **EUROPEAN PATENT SPECIFICATION**

(45) Date of publication and mention
of the grant of the patent:
**17.07.2013 Bulletin 2013/29**

(21) Application number: **08751617.5**

(22) Date of filing: **25.04.2008**

(51) Int Cl.:
*H04J 13/00* (2011.01)  *H04L 27/26* (2006.01)

(86) International application number:
**PCT/JP2008/001092**

(87) International publication number:
**WO 2008/136184 (13.11.2008 Gazette 2008/46)**

(54) **Wireless communication terminal , base station and methods**

Drahtloses Kommunikationsendgerät, -basisstation und -verfahren

Terminal de communication sans fil, station de base et procédés

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.04.2007 JP 2007117468
19.06.2007 JP 2007161957**

(43) Date of publication of application:
**06.01.2010 Bulletin 2010/01**

(73) Proprietor: **Panasonic Corporation
Kadoma-shi
Osaka 571-8501 (JP)**

(72) Inventors:
• **OGAWA, Yoshihiko
Osaka 540-6207 (JP)**
• **IMAMURA, Daichi
Osaka 540-6207 (JP)**
• **IWAI, Takashi
Osaka 540-6207 (JP)**
• **TAKATA, Tomofumi
Osaka 540-6207 (JP)**

(74) Representative: **Grünecker, Kinkeldey,
Stockmair & Schwanhäusser
Leopoldstrasse 4
80802 München (DE)**

(56) References cited:
• **PANASONIC: 'Frequency dependent PUSCH DM-RS generation method with considering eNB-specific allocation' 3GPP TSG RAN WG1 MEETING #50 vol. R1-073628, 24 August 2007, pages 1 - 5, XP050107225**
• **PANASONIC, NTT DOCOMO: 'Uplink reference signal structure and allocation for E-UTRA' TSG-RAN WG1 MEETING #47BIS vol. R1-070190, 19 January 2007, pages 1 - 6, XP008119800**
• **PANASONIC: 'Realization of cyclic shift restriction for RACH' 3GPP TG RAN WG1 MEETING #48BIS vol. R1-071518, 30 March 2007, pages 1 - 5, XP008119806**
• **PANASONIC, NTT DOCOMO: 'RACH Zadoff-Chu sequence definition and allocation' TSG-RAN WG1 MEETING #48 vol. R1-071111, 16 February 2007, pages 1 - 3, XP008119803**
• **HUAWEI: 'Sequence Allocation Method for E-UTRA Uplink Reference Signal' 3GPP TSG RAN WG1 MEETING #48 vol. R1-071109, 16 February 2007, XP050105100**
• **PANASONIC, NTT DOCOMO: 'RACH sequence allocation and indication to the cell' 3GPP TSG RAN WG1 MEETING #49BIS vol. R1-072800, 29 June 2007, pages 1 - 9, XP008119805**

EP 2 141 841 B1

**Description**

Technical Field

The present invention relates to a wireless communication terminal apparatus, wireless communication base station apparatus and wireless communication method using CAZAC (Constant Amplitude and Zero Auto-correlation Code) sequences such as Zadoff-Chu sequences as reference signals.

Background Art

3GPP LTE (3rd Generation Partnership Project Long-term Evolution) has adopted Zadoff-Chu sequences (hereinafter, "ZC sequences") as reference signals for uplink channel estimation. This ZC sequence is one type of a CAZAC sequence and is represented by following equation 1 in the time domain.
[1]

$$f_r(k) = \begin{cases} \exp\left\{\dfrac{-j2\pi r}{N}\left(\dfrac{k(k+1)}{2} + pk\right)\right\}, \ when \ N \ is \ odd, \ k = 0,1,...,N-1 \\ \exp\left\{\dfrac{-j2\pi r}{N}\left(\dfrac{k^2}{2} + pk\right)\right\}, \ when \ N \ is \ even, \ k = 0,1,...,N-1 \end{cases} \quad ...\ (Equation\ 1)$$

Here, N is the sequence length, r is the ZC sequence number in the time domain, and N and r are coprime. Further, p is an arbitrary integer (generally, p=0). Although a case will be explained below where the sequence length N is an odd number, the same applies in case of an even number.
A cyclic shift ZC sequence acquired by cyclically shifting the ZC sequence of equation 1 in the time domain or a ZC-ZCZ (Zadoff-Chu Zero Correlation Zone) sequence is represented by following equation 2.
[2]

$$f_{r,m}(k) = \exp\left\{\dfrac{-j2\pi r}{N}\left(\dfrac{(k \pm m\Delta)(k \pm m\Delta + 1)}{2}\right) + pk\right\}, \ when \ N \ is \ odd, \ k = 0,1,...,N-1 \quad ...$$

$$(Equation\ 2)$$

Here, m is the cyclic shift number and $\Delta$ is the amount of cyclic shift. The sign "$\pm$" may be either plus or minus. Further, the sequence acquired by performing a Fourier transform of the time domain ZC sequence of equation 1 into the frequency domain, is also the ZC sequence, and, consequently, the frequency domain ZC sequence is represented by following equation 3.
[3]

$$F_u(k) = \exp\left\{\dfrac{-j2\pi u}{N}\left(\dfrac{k(k+1)}{2} + qk\right)\right\}, \ when \ N \ is \ odd, \ k = 0,1,...,N-1 \ ... \ (Equation\ 3)$$

Here, N is the sequence length, u is the ZC sequence number in the frequency domain, and N and u are coprime. Further, q is an arbitrary integer (generally q=0). Similarly, frequency domain representation of the time domain ZC-ZCZ sequence of equation 2 is provided by following equation 4 given that cyclic shift and phase rotation provide the relationship of a Fourier transform pair.
[4]

$$F_{u,m}(k) = \exp\left\{\frac{-j2\pi u}{N}\left(\frac{k(k+1)}{2}+qk\right)\pm\frac{j2\pi\Delta m}{N}k\right\}, \ when \ N \ is \ odd, \ k = 0,1,...,N-1 \qquad \cdots$$

(Equation 4)

Here, N is the sequence length, u is the ZC sequence number in the frequency domain, and N and u are coprime. Further, m is the cyclic shift number, $\Delta m$ is the amount of cyclic shift and q is an arbitrary integer (generally, q=0).

Hereinafter, an explanation will be made using frequency domain representation of the cyclic shift ZC sequence (i.e. ZC-ZCZ sequence) as shown in equation 4.

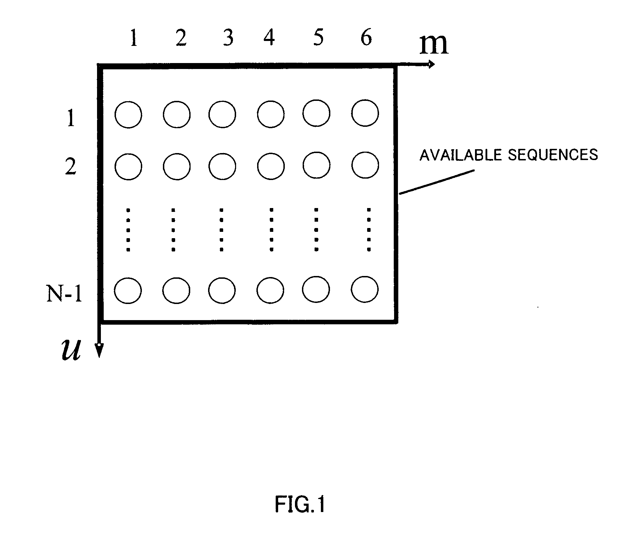

With ZC sequences, two kinds of a sequence of a varying sequence number (u) and a sequence of a varying amount of cyclic shift ($\Delta m$) can be used as reference signals (see FIG.1). These ZC sequences of different sequence numbers are semi-orthogonal to each other (that is, these ZC sequences are correlated little and are nearly orthogonal to each other), and the sequences of the different amounts of cyclic shift are orthogonal, providing good cross-correlation characteristics between sequences. Here, given the characteristics of CAZAC sequences, sequences of the different amounts of cyclic shift make it easy to provide orthogonality between cells in which frame synchronization is established.

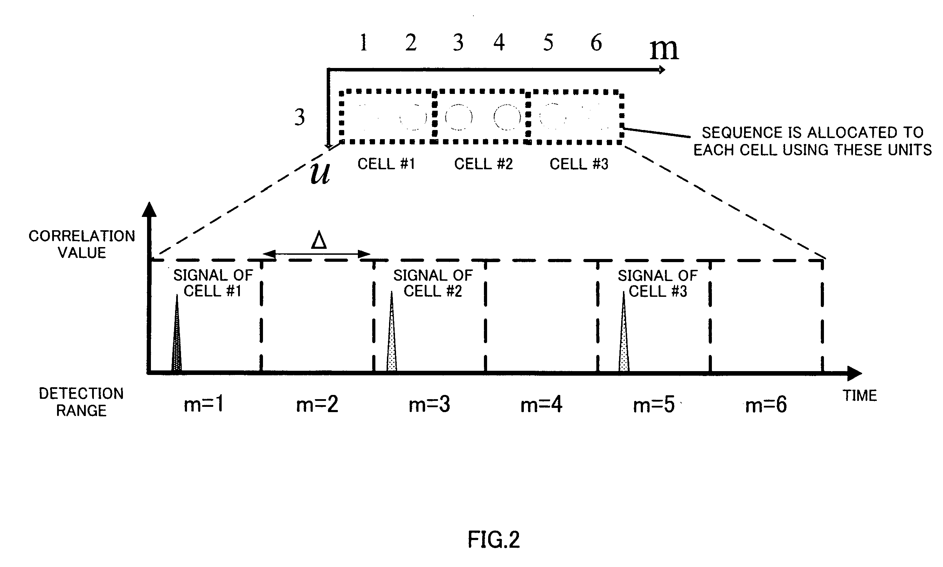

Non-Patent Document 1 and Non-Patent Document 2 are directed to increasing reuse factors of sequences, and propose assigning different cyclic shift sequences (m) of the same sequence number (u) between cells (for example, cells that belong to the same base station) in which frame synchronization is established as shown in FIG.2 ("Method 1"). For example, cells in which inter-frame synchronization is established use ZC sequences of the same sequence number u=3, cell #1 uses cyclic shift numbers m=1 and 2, cell #2 uses cyclic shift numbers m=3 and 4 and cell #3 uses cyclic shift numbers m=5 and 6.

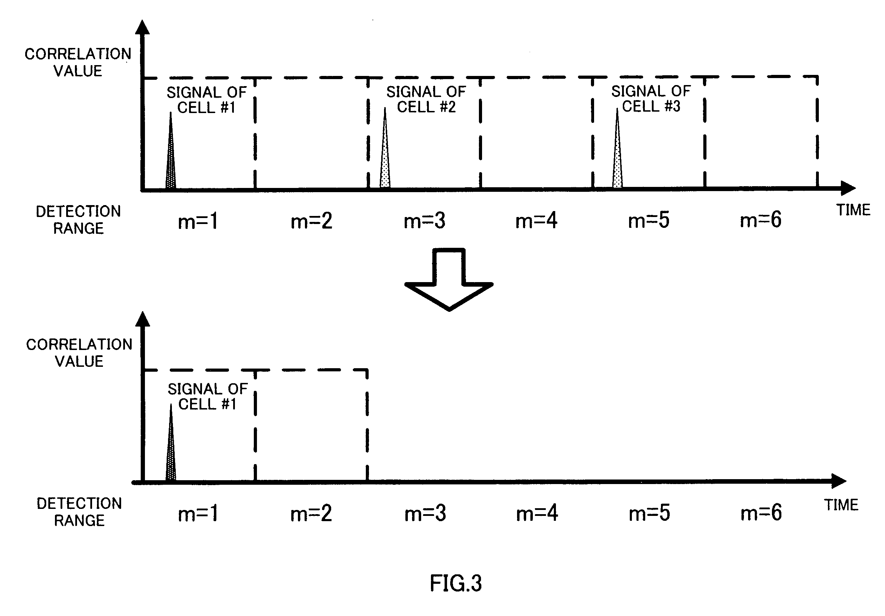

The receiving side has detection ranges (i.e. detection windows) matching the assigned cyclic shift numbers, and can separate cell-specific signals from received signals as shown in FIG.3 by removing signals outside detection windows. That is, cell #1 extracts only detection windows of cyclic shift numbers m = 1 and 2 to separate cell-#1-specific signals from received signals. Further, in case of each terminal transmits a reference signal at the same time using the same transmission band, if a varying cyclic shift number (m) is set to each reference signal, it is possible to separate each signal.

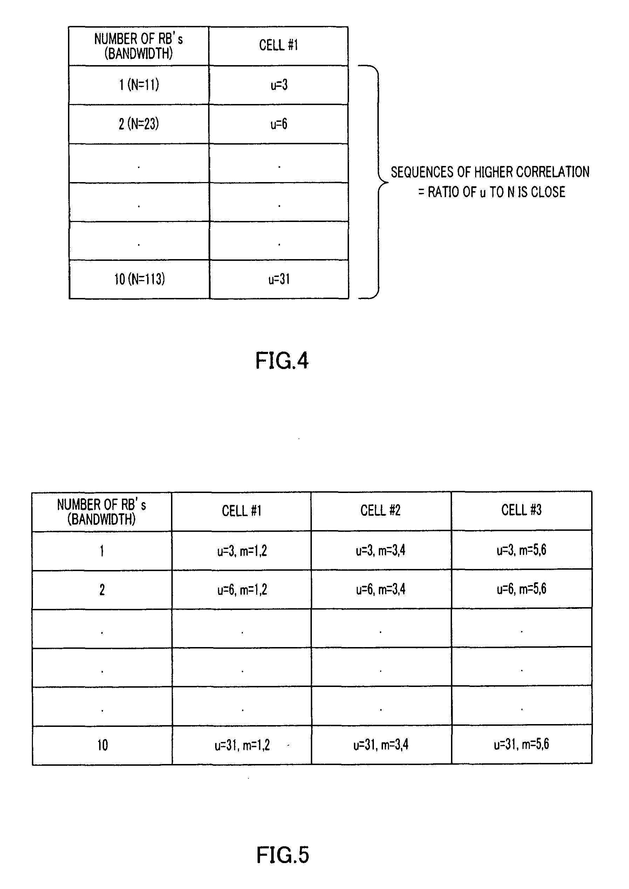

Referring again to ZC sequences, although ZC sequences of different sequence numbers are semi-orthogonal as described above, it is known that there are combinations of sequence numbers of high cross-correlation depending on ZC sequences of different sequence lengths. For example, sequences having close ratios of sequence lengths (N) to sequence numbers (u) provide high cross-correlation. If such sequences are utilized by neighboring cells, there is a possibility that significant interference peaks appear in cell-specific detection ranges, and, because a base station cannot tell from which cell a terminal transmits a reference signal, an error occurs in a channel estimation result. Non-Patent Document 3 and Non-Patent Document 4 are directed to alleviating interference from neighboring cells, and propose a grouping method of assigning sequences of high cross-correlation to the same cell as shown in FIG.4 ("Method 2"). By assigning these sequence numbers of high cross-correlation to the same cell as a group, it is possible to avoid the use of sequence numbers of high cross-correlation by neighboring cells.

Non-Patent Document 1: "Uplink Reference Signal Multiplexing Structures for E-UTRA," Motorola, R1-062610, 3GPP TSG RAN WG1Meeting #46bis,Soul, Korea, Oct.9-13,2006
Non-Patent Document 2: "Narrow band uplink reference signal sequences and allocation for E-UTRA," Panasonic, R1-063183, 3GPP TSG RAN WG1Meeting #47, Riga,Latcia, November.6-10, 2006
Non-Patent Document 3: "Sequence Assignment for Uplink Reference Signal," Huawei, R1-063356, 3GPP TSG RAN WG1Meeting #47, Riga. Latvia, Nov.6-10,2006
Non-Patent Document 4: "Binding method for UL RS sequence with different lengths," LGE, R1-070911, 3GPP TSG RAN WG1Meeting #48, St. Louis, USA, Feb.12-16, 2007

Disclosure of Invention

Problems to be Solved by the Invention

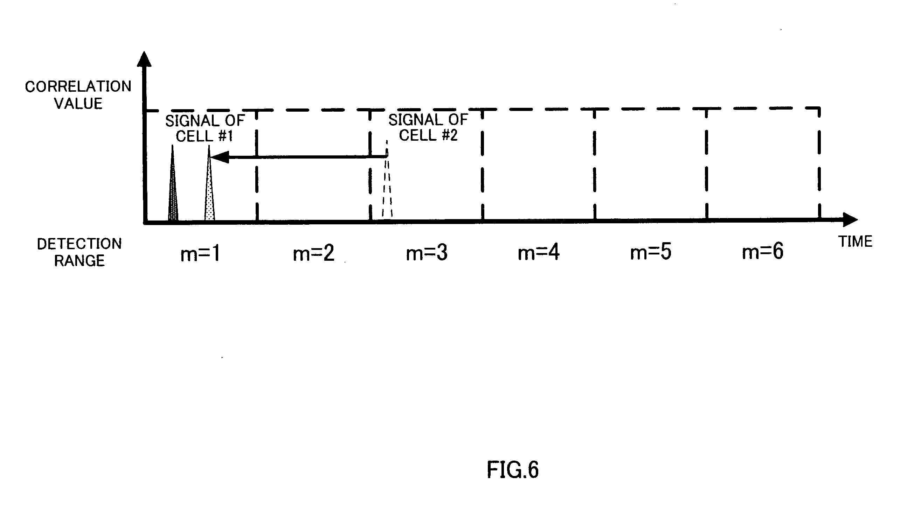

However, when the above method 1 and method 2 are adopted at the same time, interference occurs between cells in which synchronization is established. In cells in which synchronization is established, different cyclic shift sequences of the same sequence number are utilized, and sequence numbers of high cross-correlation are assigned to each bandwidth of a ZC sequence in the same cell (see FIG. 5). At this time, there is little possibility that correlation peaks (i.e. interference wave peaks) of interference waves arriving from neighboring cells appear in detection windows (detection windows for desired wave peaks) for cyclic shift sequences set in advance, and, when these interference wave peaks appear in the assigned cell-specific detection windows for the cyclic shift sequences, precision of channel estimation in the base station deteriorates significantly (see FIG.6).

This is because cyclic shift sequences are assigned using different reference points between cells and between transmission bandwidths. That is, cyclic shift sequences are generated based solely on the bandwidth of the RB transmission band (i.e. the number of RB's) allocated to each cell. Therefore, when neighboring cells have different RB transmission bands, the relative relationships between sequences collapses upon correlation calculation and interference wave peaks appear in detection windows for desired wave peaks. If interference wave peaks appear in detection windows for desired wave peaks, the delay profile of the desired wave and the delay profile of the interference wave cannot be separated and therefore channel estimation precision deteriorates.

Here, the RB transmission band refers to the frequency band that is assigned to a transmitting station at a given point in time to transmit ZC sequence data, and RB (Resource Block) refers to a unit of an allocating frequency domain band formed with one or more subcarriers.

Further, if different cyclic shift ZC sequences are assigned to RB transmission bands of the same bandwidth between cells, the same problem occurs between these cyclic shift ZC sequences. That is, correlation value peaks of interference waves appear in positions different from positions determined according to the amount of shift set in advance in the time domain, and channel estimation precisions of desired waves deteriorate.

It is therefore an object of the present invention to provide a wireless communication terminal apparatus, wireless communication base station apparatus and wireless communication method for preventing interference wave peaks from appearing in assigned cell-specific detection windows for cyclic shift sequences and improving channel estimation precision in the base station.

Means for Solving the Problem

The wireless communication terminal apparatus according to one aspect employs a configuration which includes: an applying section that uses a frequency set in advance as a reference point, and that applies, to a Zadoff-Chu sequence, one of phase rotation and cyclic shift corresponding to a frequency difference $\delta$ between the reference point and a transmission band of a reference signal transmitted from the wireless communication terminal apparatus; and a transmitting section that transmits, as the reference signal, the Zadoff-Chu sequence to which one of phase rotation and cyclic shift is applied.

The wireless communication base station apparatus according to another aspect employs a configuration which includes: a dividing section that uses a frequency set in advance as a reference point, and that divides a reference signal included in a received signal using a Zadoff-Chu sequence to which one of phase rotation and cyclic shift corresponding to a frequency difference $\delta$ between the reference point and a transmission band of the reference signal allocated to a wireless communication terminal apparatus, is applied, to calculate a correlation value; and an extracting section that extracts a correlation value in a period in which a correlation value of a desired sequence is present, from the calculated correlation value.

The wireless communication method according to further another aspect includes: using a frequency set in advance as a reference point and applying, to a Zadoff-Chu sequence, one of phase rotation and cyclic shift corresponding to a frequency difference $\delta$ between the reference point and a transmission band of a reference signal transmitted from a wireless communication terminal apparatus; transmitting, as the reference signal, the Zadoff-Chu sequence to which one of phase rotation and cyclic shift is applied, from the wireless communication terminal apparatus; dividing the reference signal included in a received signal using the Zadoff-Chu sequence, to calculate a correlation value; and extracting a correlation value in a period in which a correlation value of a desired sequence is present, from the calculated correlation value.

The invention is defined in the appended independent claims.

Advantageous Effects of Invention

The present invention makes it possible to prevent interference wave peaks from appearing in assigned cell-specific detection windows for cyclic shift sequences and improve channel estimation precision in the base station.

Brief Description of Drawings

FIG.1 shows ZC sequences that can be utilized as reference signals;
FIG.2 shows how different cyclic shift sequences of the same sequence number are assigned;

FIG.3 shows detection ranges matching cyclic shift numbers, and shows how a cell-specific signal is separated from a received signal;

FIG.4 shows the methods of grouping sequences disclosed in Non-Patent Document 3 and Non-Patent Document 4;

FIG.5 illustrates a method of assigning sequence numbers of high cross-correlation in cells in which synchronization is established;

FIG.6 shows how an interference wave peak appears in an assigned cell-specific detection window for a cyclic shift sequence;

FIG.7 is a block diagram showing a configuration of a terminal according to Embodiments 1 to 6 of the present invention;

FIG.8 shows the transmission band of a ZC sequence $\delta$ subcarriers apart from the reference point;

FIG.9 is a block diagram showing a configuration of the base station according to Embodiments 1 and 6 of the present invention;

FIG.10 shows that a desired wave is transmitted from cell #1 and an interference wave is transmitted from cell #2;

FIG.11 shows that an interference wave peak is made to appear outside the detection window for the desired wave;

FIG.12 shows positions where a desired wave and an interference wave are allocated;

FIG.13 is a block diagram showing the rest of the configuration inside a reference signal generating section shown in FIG.7;

FIG.14 is a block diagram showing the configuration of the terminal according to Embodiments 2 and 7 of the present invention;

FIG.15 is a block diagram showing the rest of the configuration inside the reference signal generating section shown in FIG.14;

FIG.16 is a block diagram showing the configuration of the terminal according to Embodiments 3 and 8 of the present invention;

FIG.17 is a block diagram showing the configuration of the terminal according to Embodiments 4 and 9 of the present invention;

FIG.18 illustrates cyclic extension;

FIG.19 is a block diagram including a cyclic extension section and a truncation section according to Embodiment 1;

FIG.20 is a block diagram including the cyclic extension section and truncation section according to Embodiment 1;

FIG.21 illustrates truncation;

FIG.22 is a block diagram including the cyclic extension section and truncation section according to Embodiment 2;

FIG.23 is a block diagram including the cyclic extension section and truncation section according to Embodiment 3;

FIG.24 is a block diagram including the cyclic extension section and truncation section according to Embodiment 3;

FIG.25 is a block diagram including the cyclic extension section and truncation section according to Embodiment 4;

FIG.26 shows how ZC sequences are transmitted in different transmission bands in a neighboring cell when different cyclic shift sequences are used between cells;

FIG.27 shows the same reference point set in all cells in which frame synchronization is established as well as in each transmission bandwidth;

FIG.28A shows cyclic extension according to Embodiment 3;

FIG.28B shows cyclic extension according to Embodiment 3;

FIG.29A shows truncation according to Embodiment 3;

FIG.29B shows truncation according to Embodiment 3; and

FIG.30 shows the relationship between coefficients of a ZC sequence to be transmitted and subcarriers.

Best Mode for Carrying Out the Invention

Hereinafter, embodiments of the present invention will be explained in detail with reference to the accompanying drawings.

(Embodiment 1)

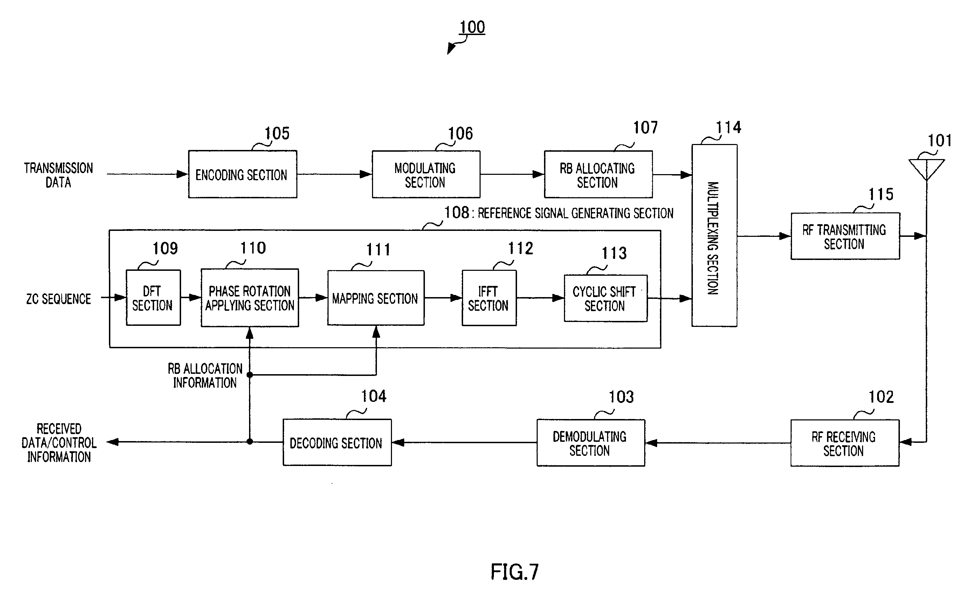

The configuration of terminal 100 according to Embodiment 1 of the present invention will be explained using FIG.7. RF receiving section 102 performs reception processing such as down-conversion and AD conversion of a signal received through antenna 101, and outputs the signal subjected to reception processing, to demodulating section 103. Demodulating section 103 performs equalization processing and demodulation processing of the signal outputted from RF receiving section 102, and outputs the signal subjected to these processings, to decoding section 104. Decoding section 104 performs decoding processing of the signal outputted from demodulating section 103, and extracts a data signal and control information. Further, in the extracted control information, decoding section 104 outputs the RB (Resource Block) allocation information to phase rotation applying section 110 and mapping section 111 of reference signal generating section 108.

Encoding section 105 encodes transmission data and outputs the encoded data to modulating section 106. Modulating section 106 modulates the encoded data outputted from encoding section 105, and outputs the modulated signal to RB allocating section 107. RB allocating section 107 allocates the modulated signal outputted from modulating section 106, to an RB, and outputs the modulated signal allocated to the RB, to multiplexing section 114.

Reference signal generating section 108 has DFT section 109, phase rotation applying section 110, mapping section 111, IFFT section 112, and cyclic shift section 113, and generates a reference signal from a ZC sequence based on the RB allocation information outputted from decoding section 104 and outputs the generated reference signal to multiplexing section 114. The configuration inside reference signal generating section 108 will be explained below.

DFT section 109 performs DFT processing of a ZC sequence outputted from the ZC sequence generating section (not shown) that generates ZC sequences, converts the ZC sequence from a time domain signal into a frequency domain signal, and outputs the ZC sequence converted into the frequency domain, to phase rotation applying section 110. Here, using RB allocation information in the control information extracted in decoding section 104, the ZC sequence generating section (not shown) specifies a transmission bandwidth, and specifies the ZC sequence length N matching the transmission bandwidth. Further, the ZC sequence generating section specifies a sequence number using information in the control information extracted in decoding section 104 that shows the sequence number allocated to the cell to which terminal 100 belongs. Using these sequence length and sequence number, the ZC sequence generating section generates a ZC sequence and outputs the ZC sequence to DFT section 109.

Further, a Fourier transform pair of a ZC sequence are mapped in the ZC sequence and therefore will be explained below using the ZC sequence generated directly in the frequency domain. That is, the ZC sequence that is outputted from DFT section 109 and that does not include cyclic shift is represented by equation 3, and the signal outputted from DFT section 109 is represented by equation 4 with the configuration where cyclic shift section 113 is arranged before DFT section 109.

Using the frequency determined in the system band for convenience as the reference point, phase rotation applying section 110 applies phase rotation corresponding to the frequency difference $\delta$ between the reference point and the transmission band of the reference signal, to the ZC sequence outputted from DFT section 109, and outputs the ZC sequence to which phase rotation is applied, to mapping section 111.

Further, the frequency that serves as the reference point can be read as a subcarrier, and the frequency that serves as the reference point assumes a common value between a plurality of cells.

Mapping section 111 maps the ZC sequence outputted from phase rotation applying section 110 upon the band matching the transmission band of terminal 100, based on RB allocation information outputted from decoding section 104, and outputs the mapped ZC sequence to IFFT section 112. IFFT section 112 performs IFFT (Inverse Fast Fourier Transform) processing of the ZC sequence outputted from mapping section 111, and outputs the ZC sequence subjected to IFFT processing, to cyclic shift section 113.

Cyclic shift section 113 cyclically shifts the ZC sequence outputted from IFFT section 112, based on a predetermined amount of shift, and outputs the cyclically shifted ZC sequence to multiplexing section 114 as a reference signal. The amount of shift is determined using, for example, control information reported from the base station.

Multiplexing section 114 time-multiplexes the transmission data (i.e. modulated signal) outputted from RB allocating section 107 and the ZC sequence (i.e. reference signal) outputted from cyclic shift section 113, and outputs a multiplex signal to RF transmitting section 115. Here, the multiplexing method in multiplexing section 114 is not limited to time-multiplexing, and frequency-multiplexing, code-multiplexing and IQ-multiplexing in complex space are also possible.

RF transmitting section 115 performs transmission processing such as D/A conversion, up-conversion and amplification of the multiplex signal outputted from multiplexing section 114, and transmits the signal subjected to transmission processing, from antenna 101 by radio.

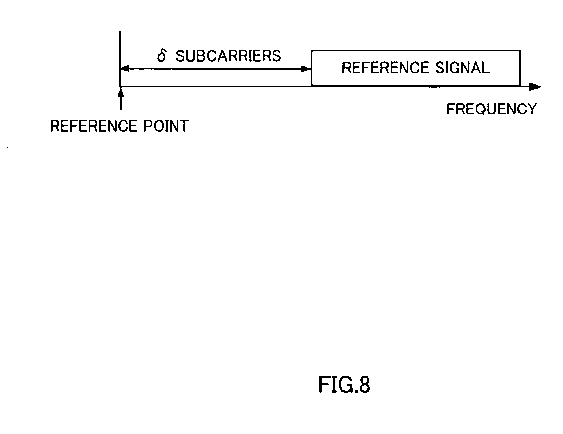

Here, the reason why phase rotation is applied to the ZC sequence in reference signal generating section 108 will be explained. First, as shown in FIG. 8, when the transmission band of the ZC sequence is positioned $\delta$ subcarriers apart from the reference point, frequency domain representation of the ZC sequence that takes into account the reference point is provided by following equation 5.

[5]

$$F_{u,m}(k+\delta) = \exp\left\{\frac{-j2\pi u}{N}\left(\frac{k(k+1)}{2} + qk\right) \pm \frac{j2\pi\Delta m}{N}k\right\} \times \exp\left\{\frac{-j2\pi u}{N}\left(\frac{\delta(\delta+1)}{2} + q\delta\right) \pm \frac{j2\pi\Delta m}{N}\delta\right\} \times \exp\left\{\frac{-j2\pi u}{N}(k\delta)\right\} \quad \cdots$$

(Equation 5)

In above equation 5, N is the sequence length (i.e. prime number) and k is the subcarrier number (k=0, 1, 2, ... and N-1). Further, in above equation 5, the first term on the right side represents the ZC sequence (i.e. $F_{u.m}(k)$ represented in equation 4) that does not take into account the transmission band, and the peak position is determined based on the amount of cyclic shift of the default settings. Furthermore, the second term is a constant term that does not depend on the subcarrier k and is not an element that moves the peak position. Still further, the third term is the phase rotation term that depends on the transmission band, and, thanks to this third term, even if elements of the cell-specific ZC sequence utilized upon correlation calculation and elements of ZC sequences of neighboring cells are allocated to different bands, it is possible to maintain the same relationship between these ZC sequences. Here, the phase rotation term of the third term depends on the transmission band, sequence number and sequence length for terminal 100, and does not depend on, for example, transmission bands for other terminals. That is, the essential requirement is that terminal 100 transmits the first term and the third term on the right side in above equation 5. For example, as shown in following equation 6, terminal 100 applies phase rotation of the third term to the first term and transmits the result.
[6]

$$F_{u,m}(k) \times \exp\left\{\frac{-j2\pi u}{N}(k\delta)\right\} \quad \cdots \quad (\mathrm{E\,q\,u\,a\,t\,i\,o\,n} \;\; 6)$$

Here, it is also possible to add the constant term (i.e. the second term) on the right side of above equation 5, to the first term and transmit the result. Further, the constant term to add is not necessarily limited to the above. Furthermore, it is also possible to substitute $k+\delta$ for k on the left side of equation 4 and transmit the result by utilizing $\delta$ representing the frequency difference between the reference point and the transmission band of the reference signal transmitted from terminal 100.

Further, the phase rotation term of the third term in above equation 5 depends on the transmission band, sequence number and sequence length for terminal 100, and does not depend on, for example, the transmission bands for other terminals.

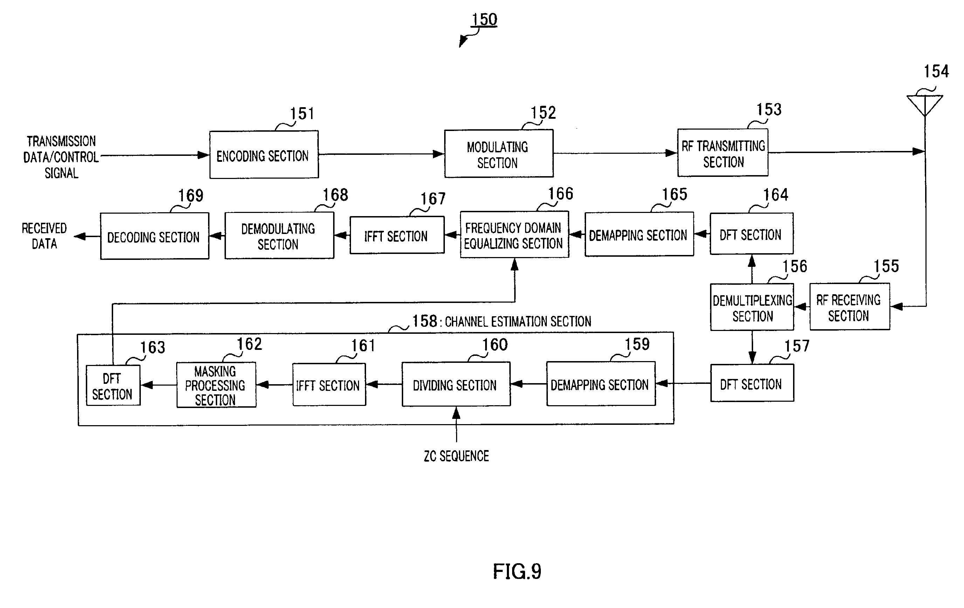

Next, the configuration of base station 150 according to Embodiment 1 of the present invention will be explained using FIG.9. Encoding section 151 encodes transmission data and a control signal, and outputs encoded data to modulating section 152. Modulating section 152 modulates encoded data, and outputs the modulated signal to RF transmitting section 153. RF transmitting section 153 performs transmission processing such as D/A conversion, up-conversion and amplification of the modulated signal, and transmits the signal subjected to transmission processing, from antenna 154 by radio.

RF receiving section 155 performs reception processing such as down-conversion and A/D conversion of the signal received at antenna 154, and outputs the signal subjected to reception processing, to demultiplexing section 156.

Demultiplexing section 156 demultiplexes the signal outputted from RF receiving section 155, to the reference signal, the data signal and the control signal, and outputs the demultiplexed reference signal to DFT (Discrete Fourier Transform) section 157 and outputs the data signal and control signal to DFT section 164.

DFT section 157 performs DFT processing of the reference signal outputted from demultiplexing section 156, converts the signal from a time domain signal into a frequency domain signal, and outputs the reference signal converted into the frequency domain, to demapping section 159 of channel estimation section 158.

Channel estimation section 158 has demapping section 159, dividing section 160, IFFT (Inverse Fast Fourier Transform) section 161, masking processing section 162 and DFT section 163, and estimates the channel based on the reference signal outputted from DFT section 157. The configuration inside channel estimation section 158 will be explained in detail below.

Demapping section 159 extracts the portion matching the transmission band of each terminal from the signal outputted from DFT section 157, and outputs each extracted signal to dividing section 160.

Dividing section 160 divides the signal outputted from demapping section 159 using the ZC sequence to which phase rotation corresponding to the frequency difference $\delta$ between the reference point and transmission band is applied, and outputs the division result (i.e. correlation value) to IFFT section 161. That is, dividing section 160 uses the ZC sequence of equation 5 when the ZC sequence represented by equation 5 is transmitted in terminal 100, and uses the ZC sequence of equation 6 when the ZC sequence represented by equation 6 is transmitted in terminal 100. Further, dividing section 160 performs division using the same ZC sequence upon transmission and, consequently, no matter which of the ZC sequence of equation 5 to which the constant term is added or the ZC sequence of equation 6 to which the constant term is not added, is used, it is possible to correctly detect a complex profile (i.e. channel estimation) of the desired wave.

IFFT section 161 performs IFFT processing of the signal outputted from dividing section 160, and outputs the signal subjected to IFFT processing, to masking processing section 162.

Masking processing section 162, which is an extracting means, performs masking processing of the signal outputted from IFFT section 161 to extract the correlation value in the period (i.e. detection window) in which a correlation value of a desired sequence is present, and outputs the extracted correlation value to DFT section 163.

DFT section 163 performs DFT processing of the correlation value outputted from masking processing section 162, and outputs the correlation value subjected to DFT processing, to frequency domain equalizing section 166. Further, the signal outputted from DFT section 163 represents the frequency response of the channel.

DFT section 164 performs DFT processing of the data signal and control signal outputted from demultiplexing section 156, converts the signals from time domain signals into frequency domain signals and outputs the data signal and control signal converted into the frequency domain, to demapping section 165.

Demapping section 165 extracts the data signal and control signal of the portion matching the transmission band of each terminal, from the signals outputted from DFT section 164, and outputs each extracted signal to frequency domain equalizing section 166.

Frequency domain equalizing section 166 performs equalizing processing of the data signal and control signal outputted from demapping section 165 using the signal (i.e. the frequency response of the channel) outputted from DFT section 163 in channel estimation section 158, and outputs the signal subjected to equalizing processing, to IFFT section 167.

IFFT section 167 performs IFFT processing of the data signal and control signal outputted from frequency domain equalizing section 166, and outputs the signals subjected to IFFT processing, to demodulating section 168. Demodulating section 168 performs demodulation processing of the signals subjected to IFFT processing, and outputs the signals subjected to demodulation processing, to decoding section 169. Decoding section 169 performs decoding processing of the signals subjected to decoding processing, and extracts received data.

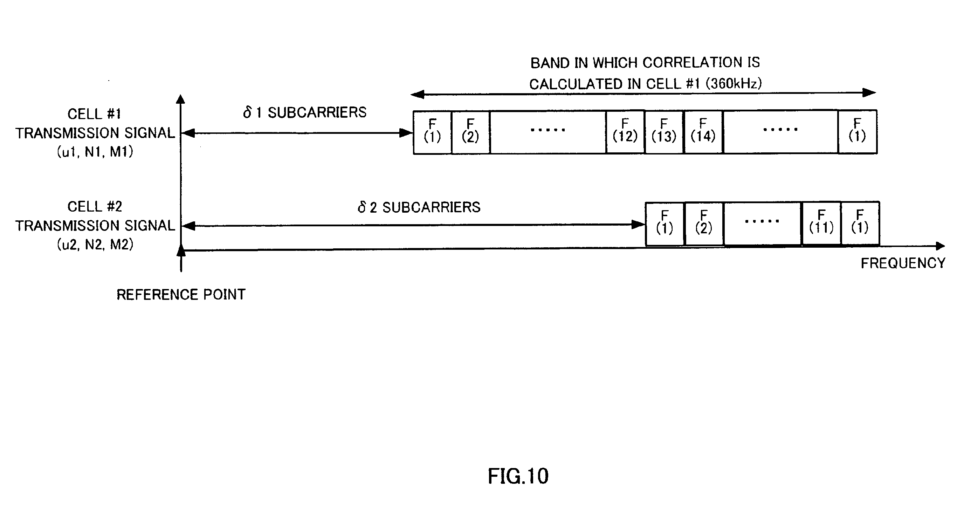

Here, dividing section 160 in channel estimation section 158 will be explained using an equation. A case will be assumed as an example where, as shown in FIG.10, a desired wave (i.e. the ZC sequence that utilizes u1 andN1 in equation 6) is transmitted from cell #1, an interference wave (i.e. the ZC sequence that utilizes u2 and N2 in equation 6) is transmitted from cell #2 and these waves are combined and received at the base station. At this time, when the ZC sequence (u2, N2), which is the interference wave, is divided by the ZC sequence (u1, N1), which is the desired wave, in dividing section 160, if a combination of high cross-correlation is provided, that is, if the relationship u1/N1≈u2/N2≈u/N is satisfied, the frequency response of an interference wave in dividing section 160 is represented by following equation 7.

[7]

$$\frac{F_{u2,m2,N2}(k-(\delta 2-\delta 1))\times \exp\left\{\dfrac{-j2\pi u2}{N2}\big((k-(\delta 2-\delta 1))\delta 2\big)\right\}}{F_{u1,m1,N1}(k)\times \exp\left\{\dfrac{-j2\pi u1}{N1}(k\delta 1)\right\}}=\exp\left\{\pm j\frac{2\pi\Delta(m2-m1)}{N}k\right\}\times Const$$

$$k = J, J+1, \ldots, N-1, J=\delta 2-\delta 1 \ldots (Equation\ 7)$$

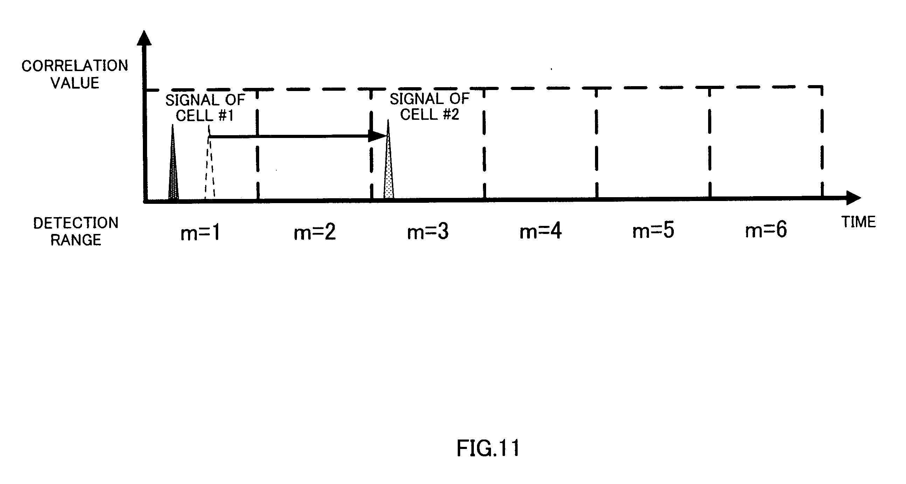

In above equation 7, although "Const" in the second term on the right side does not depend on the subcarrier k and therefore is unrelated to the position of the interference wave peak, the first term on the right side can make the interference wave peak appear in the position (m2-m1)Δ samples apart from the desired wave peak in the time domain. By this means, as shown in FIG.11, it is possible to make the interference wave peak appear outside the detection window for the desired wave and separate the cell-specific signal, so that it is possible to improve channel estimation precision.

With the ZC sequence generating method according to the present embodiment, it is possible to maintain the positions of correlation peaks of a desired wave and interference wave based on a predetermined amount of cyclic shift regardless of the transmission band. This will be explained below.

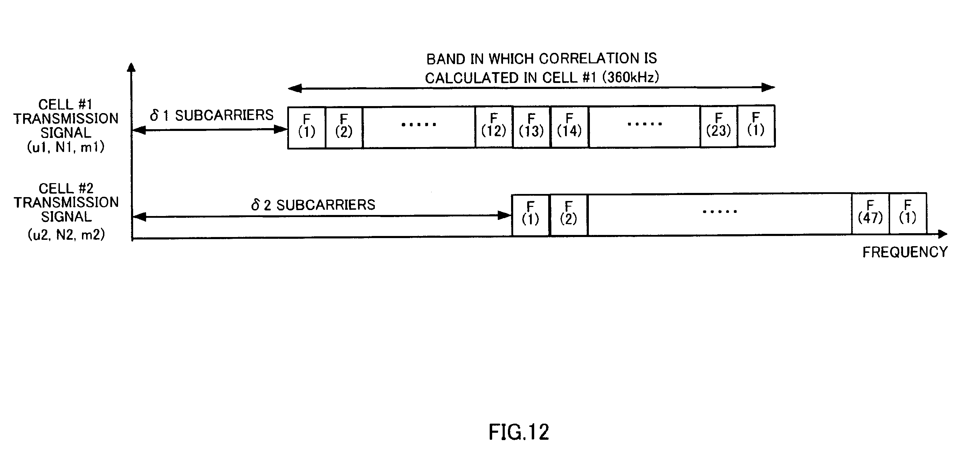

For example, a conventional scheme assumes that the desired wave (sequence number u1, sequence length N1 and cyclic shift number m1) is transmitted in the RB transmission band shown in FIG.12, from cell #1 and an interference wave (sequence number u2, sequence length N2 and cyclic shift number m2) is transmitted in the RB transmission band shown in FIG.12, from cell #2, and the ZC sequence of cell #2 is received in cell #1. Here, the ZC sequences represented by equation 4 are generated in respective cells regardless of transmission frequency bands.

In this case, the spectrum value at the head of the ZC sequence of cell #2 is divided by the thirteenth spectrum value in the ZC sequence of cell #1. Further, if a combination of high cross-correlation is provided, that is, if the relationship u1/N1≈u2/N2≈u/N is satisfied, the correlation value peak of the ZC sequence of cell #2 appears in a position different from the position set in advance according to the amount of cyclic shift in the time domain. This is represented by following equation 8. Here, "Const" represents a constant number term.

[8]

$$\frac{F_{u2,m2,N2}\left(k-(\delta 2-\delta 1)\right)}{F_{u1,m1,N1}(k)}=\exp\left\{\pm j\frac{2\pi\Delta(m2-m1)}{N}k\right\}\times\exp\left\{\frac{j2\pi u}{N}(\delta 2-\delta 1)k\right\}\times Const$$

$$k=J,\ J+1,\ \ldots,\ N-1,\ J=\delta 2-\delta 1\ \ldots\ (Equation\ 8)$$

Here, the first term and the second term depend on the subcarrier k, and apply proportional phase rotation per subcarrier in the frequency domain. Phase rotation in the frequency domain is equivalent to cyclic shift in the time domain, and is a term that influences a peak position of a correlation value. By contrast with this, the third term does not depend on the subcarrier k, and does not influence a peak position of a correlation value.

Further, the first term depends on the cyclic shift numbers m2 and m1 and can determine the peak position of the correlation value according to the cyclic shift numbers provided on a per cell basis. However, the second term depends on an RB transmission band, and, although, when the RB transmission band is the same between cells, $\delta 2-\delta 1=0$ holds and therefore the second term does not influence a peak position of a correlation value, $\delta 2-\delta 1\neq 0$ holds when the RB transmission bands are different. At this time, when the second term assumes a value other than 1+j0, there is a possibility that the relationship between the peak positions of the desired wave and interference wave collapses and an interference wave appears in the detection window for the desired wave. If an interference wave peak appears in the detection window for the desired wave peak, the delay profile of the desired wave cannot be separated from the delay profile of the interference wave and therefore channel estimation precision deteriorates.

In this way, with the conventional scheme, ZC sequences and cyclic shift sequences are generated and transmitted based solely on the transmission bandwidth (i.e. the number of RB's). Accordingly, if the elements of the cell-specific ZC sequence utilized to calculate correlation and the elements of the ZC sequences of neighboring cells are allocated to different bands, the relative relationships between these ZC are not maintained.

When the cyclic shift ZC sequence generating method shown in above equation 5 is used, similar to the conventional scheme, it is assumed that, for example, the desired wave (sequence number u1, sequence length N1 and cyclic shift number m1) is transmitted in the RB transmission band shown in FIG.12, from cell #1 and the interference wave (sequence number u2, sequence length N2 and cyclic shift number m2) is transmitted in the RB transmission band shown in FIG.12, from cell #2, and the ZC sequence of cell #2 is received in cell #1. This is represented by following equation 9. Here, "Const" represents a constant number term.

[9]

$$\frac{F_{u2,m2,N2}\left(k+\delta 2-(\delta 2-\delta 1)\right)}{F_{u1,m1,N1}(k+\delta 1)}=\exp\left\{\pm j\frac{2\pi\Delta(m2-m1)}{N}k\right\}\times Const$$

$$k=J,\ J+1,\ \ldots,\ N-1,\ J=\delta 2-\delta 1\ \ldots\ (Equation\ 9)$$

Here, the first term depends on the subcarrier k and applies proportional phase rotation per subcarrier in the frequency domain. Phase rotation in the frequency domain is equivalent to cyclic shift in the time domain, and is a term that influences a peak position of a correlation value. Further, the first term depends on the cyclic shift numbers m2 and m1, and depends on the cyclic shift number provided on a per cell basis. By contrast with this, the second term does not depend on the subcarriers k and does not influence a peak position of a correlation value.

According to equation 9, when the cyclic shift ZC sequence generating method shown in above equation 5 is used, the second term of equation 8 of the conventional scheme, that is, the term that depends on the RB transmission bands $\delta 1$ and $\delta 2$ are not produced, it is possible to make the relationship between the positions of an interference wave peak and the desired wave peak depend solely on the cyclic shift numbers m1 and m2. Consequently, it is possible to make interference wave peaks appear outside detection windows for desired wave peaks and separate delay profiles of the desired waves from delay profiles of the interference waves, so that it is possible to improve channel estimation precision. Further, when the cyclic shift ZC sequence generating method shown in equation 6 is used, equation 7 holds.

In this way, a ZC sequence and cyclic shift ZC sequence are generated and transmitted based on the transmission band, that is, based on the frequency (i.e. subcarrier) position, and based additionally on the transmission bandwidth (i.e. the number of RB's). Consequently, even if the elements of the cell-specific ZC sequence utilized to calculate correlation and the elements of ZC sequences of neighboring cells are allocated to different bands, the relative relationships between these ZC sequences are maintained.

In this way, according to Embodiment 1, by setting the frequency that serves as the reference and using this frequency as the reference point to apply phase rotation corresponding to the frequency difference $\delta$ between the reference point and the transmission band of the reference signal, to the ZC sequence in the frequency domain, it is possible on the receiving side to make interference wave peaks from neighboring cells appear outside detection windows for desired wave peaks and separate cell-specific signals, so that it is possible to improve channel estimation precision. In other words, each terminal generates and transmits a reference signal using a ZC sequence according to the transmission band and transmission bandwidth, and the base station performs dividing processing using the ZC sequence which is transmitted from each terminal and which matches the transmission band and transmission bandwidth, so that it is possible to make interference wave peaks from neighboring cells and desired wave peaks appear in different detection windows.

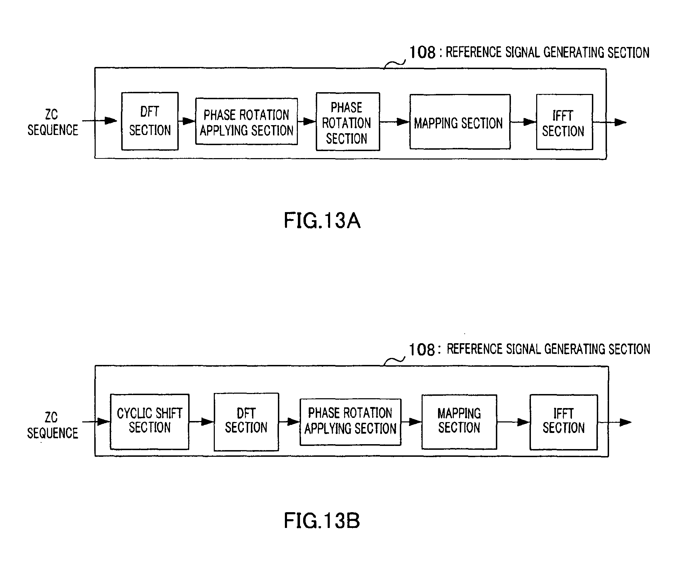

Further, although the present embodiment has been explained assuming that reference signal generating section 108 in terminal 100 is as shown in FIG.7, the configurations shown in FIG.13A and FIG.13B may be possible. The phase rotation section shown in FIG.13A allocates the amount of phase rotation of the default settings matching the cyclic shift sequence, to each subcarrier. That is, instead of applying cyclic shift to generate the assigned cyclic shift sequence in the time domain, phase rotation is applied in the frequency domain based on the amount of phase rotation matching the amount of cyclic shift. Further, two of the phase rotation applying section and phase rotation section may not be configured to apply phase rotation separately. For example, one phase rotation section may be configured to apply phase rotation in the frequency domain based on the sum of the amount of phase rotation matching the amount of cyclic shift and the amount of phase rotation corresponding to the frequency difference $\delta$ between the reference point and the transmission band of the reference signal. Further, the order of the phase rotation applying section and the phase rotation section may be altered. Further, as shown in FIG.13B, a configuration is also possible where a ZC sequence is cyclically shifted based on the predetermined amount of cyclic shift, prior to conversion of the ZC sequence in the frequency domain. These configurations can also make interference wave peaks appear outside detection windows for desired wave peaks.

Further, although a case has been explained above where the base station and mobile station are configured to generate ZC sequences in the time domain, the present invention is not limited to this, and ZC sequences may be generated in the frequency domain. That is, a configuration is possible in which the ZC sequence generating section generates a ZC sequence in the frequency domain, and the phase rotation section applies to the generated ZC sequence in the frequency domain, phase rotation corresponding to the frequency difference $\delta$ between the reference point and the transmission band of the reference signal. Further, the present invention is not limited to these configurations.

Further, the present invention is not limited to the above-described configuration of the base station, and any configuration is possible as long as the present invention is applicable to such a configuration. For example, dividing section 160 can perform dividing processing using a ZC sequence (the ZC sequence (equation 3) before phase rotation is applied instead of the ZC sequences represented by equation 5 and equation 6,) to which phase rotation corresponding to the frequency difference $\delta$ between the reference point and transmission band is applied. In this case, the period (the range of the detection window) in which a correlation value of a desired sequence is present varies depending not only on the amount of cyclic shift $m\Delta$ but also on the amount of phase rotation matching the transmission band, and, consequently, equivalent processing as in the above configuration of the base station is possible by configuring masking processing section 162 to extract the correlation value in the period (i.e. detection window) in which a correlation value of the desired sequence is present, taking into account the amount of cyclic shift $m\Delta$ and the amount of phase rotation matching the transmission band.

(Embodiment 2)

Although a case has been explained above with Embodiment 1 where the reference point is set in all cells in which frame synchronization is established as well as in the transmission bandwidth of each terminal, and phase rotation corresponding to the frequency difference $\delta$ between the reference point and the transmission band of the reference signal is applied to the ZC sequence in the frequency domain, a case will be explained with Embodiment 2 of the present invention where cyclic shift corresponding to the frequency difference $\delta$ between the reference point and the transmission band of the reference signal, is applied to the ZC sequence in the time domain. Further, the configuration of the base station according to Embodiment 2 of the present invention is the same as the configuration of Embodiment 1 shown in FIG.9, and therefore detailed explanation thereof will be omitted.

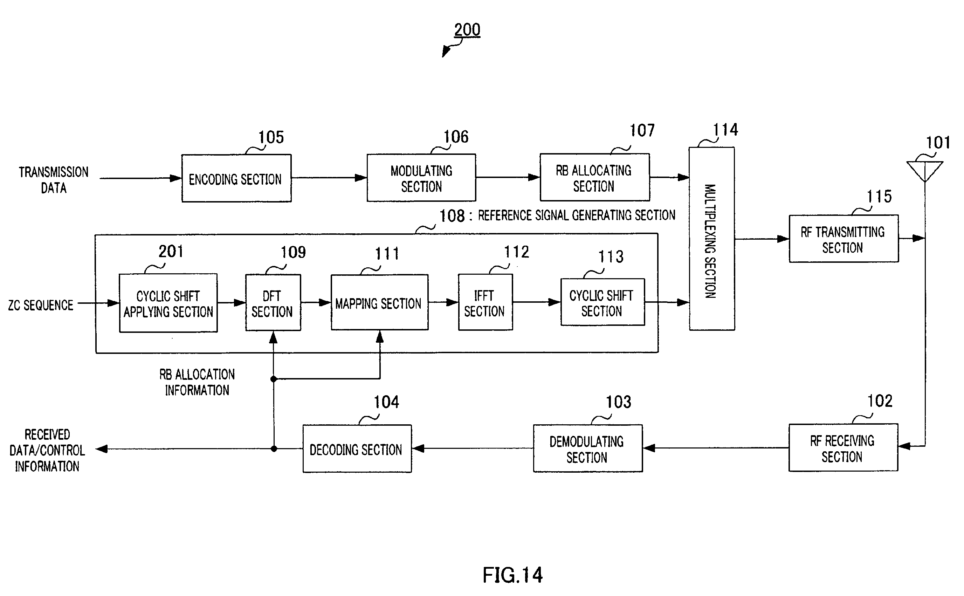

The configuration of terminal 200 according to Embodiment 2 of the present invention will be explained using FIG.14. FIG.14 differs from FIG.7 in removing phase rotation applying section 110 and adding cyclic shift applying section 201.

Cyclic shift applying section 201 applies cyclic shift corresponding to the frequency difference $\delta$ between the reference point and the transmission band of a reference signal, to a ZC sequence, and outputs the ZC sequence to which the cyclic shift is applied, to DFT section 109. Hereinafter, the processing in cyclic shift applying section 201 will be explained using equations.

First, the cyclic shift ZC sequence in the time domain, that is, the ZC-ZCZ sequence, is generally represented by following equation 10.
[10]

$$f_{r,m}(k,0) = \exp\left\{ \frac{-2\pi r}{N}\left( \frac{(k \pm m\Delta)(k \pm m\Delta + 1)}{2} + qk \right) \right\}, when\ N\ is\ odd, k = 0,1,...,N-1 \qquad ...$$

$(Equation\ 10)$

In equation 10, N is the sequence length, r is the ZC sequence number in the time domain, and N and r are coprime. Further, m is the cyclic shift number and $\Delta$ is the amount of cyclic shift.

Here, X in above f(k,X) is the frequency difference in the transmission band between the frequency (i.e. subcarriers) that serves as the reference point and the ZC sequence, that is, $\delta$ subcarriers. In equation 10, the reference point is used as the transmission band and therefore is represented as $\delta=0$.

Equation 6 converted into the time domain is represented by following equation 11. Here, "Const" represents a constant term.
[11]

$$f_{r,m}(k,\delta) = \exp\left\{ \frac{-2\pi r}{N}\left( \frac{(k \pm m\Delta - u\delta)(k \pm m\Delta - u\delta + 1)}{2} + qk \right) \right\} \times Const \qquad ...$$
$$when\ N\ is\ odd, k = 0,1,...,N-1$$

$(Equation\ 11)$

Further, it is clear from the relationship of a Fourier transform pair in equation 12 that applying phase rotation corresponding to the frequency difference $\delta$ between the reference point and the transmission band, is equivalent to applying cyclic shift corresponding to the frequency difference $\delta$ to the ZC sequence in the time domain.
[12]

$X(n)exp(-j2\pi n\Delta/N) = DFT[x(k-\Delta)], DFT[]: Discrete Fourier Transform$

$x(k-\Delta) = IDFT\{X(n)exp(-j2\pi n\Delta/N)\} IDFT[]:Inverse Discrete Fourier Transform ... (Equation 12)$

Equation 11 is equivalent to a ZC sequence acquired by applying cyclic shift corresponding to the frequency difference $\delta$ between the reference point and the transmission band of the reference signal, to the ZC sequence of equation 10 in the time domain. Therefore, cyclic shift applying section 201 applies cyclic shift (-u$\delta$) to the ZC sequence of equation 10 in the time domain.

In this way, according to Embodiment 2, by applying cyclic shift corresponding to a frequency difference $\delta$ between the reference point and transmission band of a reference signal, to a ZC sequence in the time domain, it is possible on the receiving side to make interference wave peaks from neighboring cells appear outside detection windows for desired wave peaks and separate cell-specific signals, so that it is possible to improve channel estimation precision.

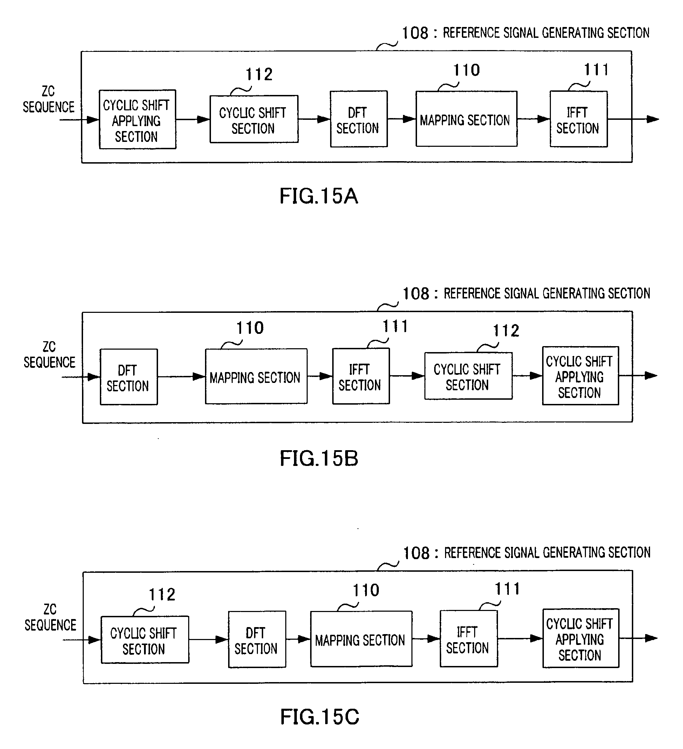

Further, although the present embodiment has been explained assuming that reference signal generating section 108 in terminal 200 is as shown in FIG.14, the configurations shown in FIG's.15A to C may be possible. FIG. 15A shows a configuration where the cyclic shift applying section and cyclic shift section are arranged before a DFT section and the cyclic shift applying section applies cyclic shift corresponding to the frequency difference $\delta$ between the reference point and the transmission band of the reference signal, to the ZC sequence in the time domain. Further, two of the cyclic shift applying section and cyclic shift section may not be configured to apply phase rotation separately. For example, one cyclic shift section may be configured to apply cyclic shift in the time domain based on the sum of the amount of cyclic shift matching the amount of phase rotation and the amount of cyclic shift corresponding to the frequency difference $\delta$ between the reference point and the transmission band of the reference signal.

Further, a configuration is also possible as shown in FIG.15B where a cyclic shift section and cyclic shift applying section are arranged after an IFFT section, and a configuration is also possible as shown in FIG.15C where a cyclic shift section is arranged before a DFT section and a cyclic shift applying section is arranged after an IFFT section. Furthermore, a configuration is also possible where a cyclic shift applying section is arranged before a DFT section and a cyclic shift section is arranged after an IFFT section. Here, if a cyclic shift applying section is arranged after an IFFT section, cyclic shift corresponding to the frequency difference δ is changed to the amount of cyclic shift for performing over-sampling, and is applied to an input signal in the time domain. Further, the order of the cyclic shift applying section and cyclic shift section may be altered in the above configuration. These configurations can also make interference wave peaks appear outside detection windows for desired wave peaks.

(Embodiment 3)

A case will be explained with Embodiment 3 of the present invention where cyclic shift corresponding to the frequency difference δ between the reference point and the transmission band of the reference signal is applied to the ZC sequence in the frequency domain. Further, the configuration of the base station according to Embodiment 3 of the present invention is the same as the configuration of Embodiment 1 shown in FIG.9, and therefore the detailed explanation thereof will be omitted.

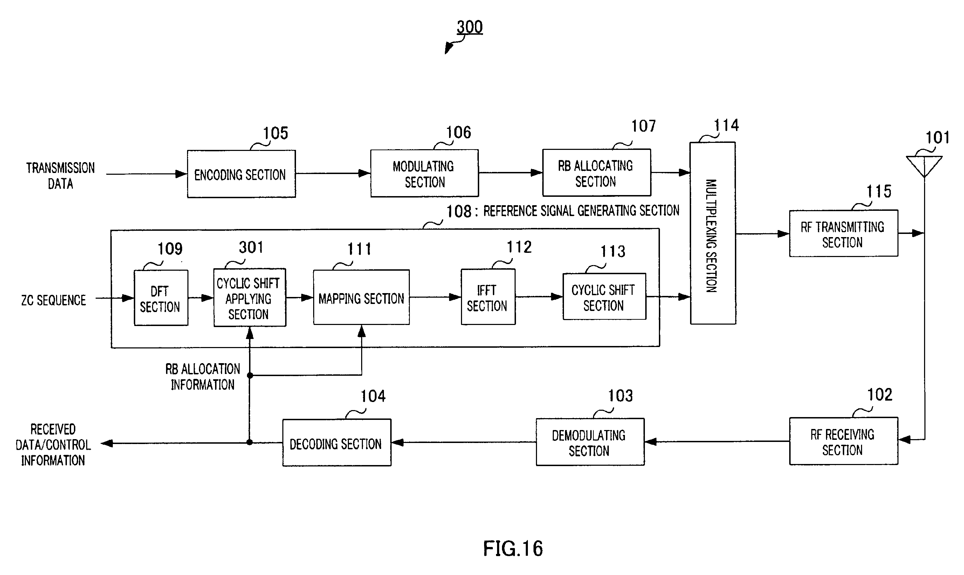

The configuration of terminal 300 according to Embodiment 3 of the present invention will be explained using FIG.16. FIG.16 differs from FIG.7 in changing phase rotation applying section 110 to cyclic shift applying section 301.

Cyclic shift applying section 301 applies cyclic shift corresponding to the frequency difference δ between the reference point and the transmission band of the reference signal, to the ZC sequence outputted from DFT section 109, and outputs the ZC sequence, to which the cyclic shift is applied, to mapping section 111.

Here, following equation 13 is derived by transforming above equation 4.

[13]

$$F_{u,m}(k+\delta) = \exp\left\{\frac{-j2\pi u}{N}\left(\frac{(k+\delta)(k+\delta+1)}{2} + qk\right) \pm \frac{j2\pi\Delta m}{N}k\right\} \times Const \quad \ldots \quad (\text{Equation 13})$$

Above equation 13 is equivalent to the ZC sequence acquired by applying the amount of cyclic shift corresponding to the frequency difference δ, to the ZC sequence represented by above equation 4, in the frequency domain. That is, the essential requirement is that the amount of cyclic shift corresponding to the frequency difference δ is applied to the ZC sequence represented by above equation 4 and the ZC sequence is transmitted. Further, cyclic shift applying section 301 applies cyclic shift (i.e. δ) to the ZC sequence in the frequency domain.

Here, it is clear from equation 5 and equation 13 that applying phase rotation corresponding to the frequency difference δ between the reference point and the transmission band of the reference signal in the frequency domain, is equivalent to applying cyclic shift corresponding to the frequency difference δ in the frequency domain. That is, the phase rotation term in equation 5 is represented in the form of cyclic shift in equation 13, and this is obviously an equivalent transform. Further, if a desired wave and an interference wave are transmitted in different RB transmission bands, k indices of these ZC sequence are cyclically shifted such that the k indices match in the frequency domain. For example, if the desired wave is a ZC sequence that starts from k=7, the interference wave is also the ZC sequence that starts from k=7.

As shown in FIG.10, a case will be assumed where a desired wave (i.e. the ZC sequence that utilizes the sequence number u1, sequence length N1 and cyclic shift number m1 in equation 8) is transmitted from cell #1, an interference wave (i.e. the ZC sequence that utilizes the sequence number u2, sequence length N2 and cyclic shift number m2 in equation 8) is transmitted from cell #2 and these desired wave and interference wave are combined and received in the base station. At this time, when the ZC sequence (u2, N2, m2), which is the interference wave, is divided by the ZC sequence (u1, N1, m1), which is the desired wave, in dividing section 160, if combination of high cross-correlation is provided, that is, if the relationship u1/N1≈u2/N2≈u/N is satisfied, the frequency response of an interference wave in dividing section 160 is represented by following equation 14.

[14]

$$\frac{F_{u2,m2,N2}(k+\delta2-(\delta2-\delta1))}{F_{u1,m1,N1}(k+\delta1)} = \exp\left\{\pm j\frac{2\pi\Delta(m2-m1)}{N}k\right\} \times Const$$

$$k = J, J+1, \ldots, N-1, J=\delta2-\delta1 \quad \ldots \quad (\text{Equation 14})$$

Here, F(k+δ1) and F(k+δ2) are obtained by applying δ1 and δ2 of cyclic shift to F(k). Further, (δ2-δ1) represents the difference between RB transmission bands. In above equation 14, the second term on the right side does not depend on the subcarrier k and therefore does not influence positions of interference wave peaks. Consequently, positions of interference wave peaks are determined based solely on the first term on the right side, so that it is possible to make an interference wave peak appear in the position (m2-m1)Δ samples apart from the desired wave peak in the time domain.

Accordingly, as shown in FIG.11, it is possible to make interference wave peak appear outside detection windows for desired waves and separate cell-specific signals, so that it is possible to improve channel estimation precision.

In this way, according to Embodiment 3, by applying cyclic shift corresponding to the frequency difference δ between the reference point and transmission band of a reference signal, to a ZC sequence in the frequency domain, it is possible on the receiving side to make interference wave peaks from neighboring cells appear outside detection windows for desired wave peaks and separate cell-specific signals, so that it is possible to improve channel estimation precision.

Further, reference signal generating section 108 shown in FIG.16 may employ a configuration where a phase rotation applying section shown in FIG.13 is changed to a cyclic shift applying section. The operation of the cyclic shift applying section is the same as described above.

(Embodiment 4)

A case will be explained now with Embodiment 4 of the present invention where phase rotation corresponding to the frequency difference δ between the reference point and the transmission band of the reference signal, is applied to the ZC sequence in the time domain. Here, the configuration of the base station according to Embodiment 4 of the present invention is the same as the configuration shown in FIG.9 of Embodiment 2, and therefore detailed explanation thereof will be omitted.

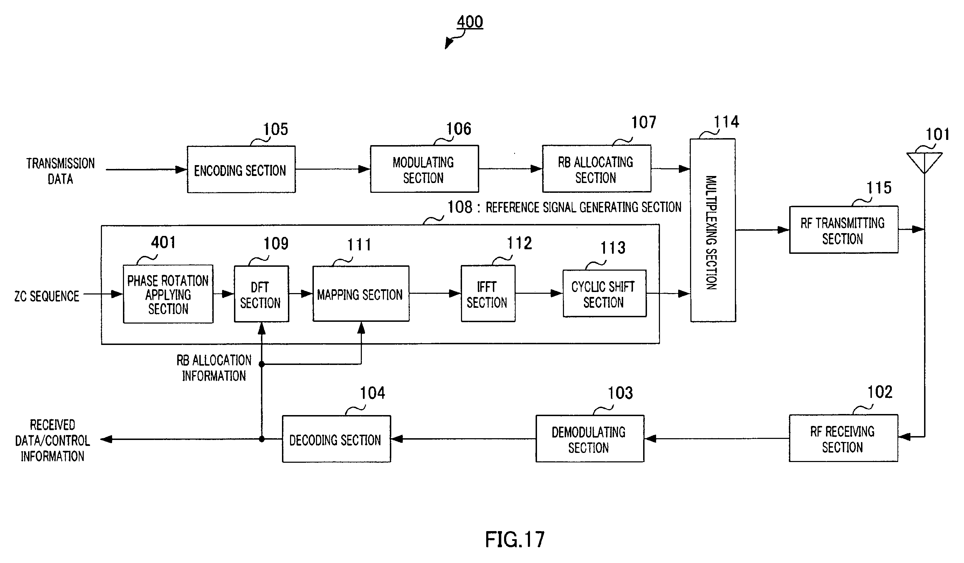

The configuration of terminal 400 according to Embodiment 4 of the present invention will be explained using FIG.17. FIG.17 differs from FIG.14 in changing cyclic shift applying section 201 to phase rotation applying section 401.

Phase rotation applying section 401 applies phase rotation corresponding to the frequency difference δ between the reference point and the transmission band of the reference signal, to the ZC sequence, and outputs the ZC sequence, to which phase rotation is applied, to DFT section 109.

Here, following equation 15 can be derived by transforming equation 13 described in Embodiment 3.

[15]

$$f_{r,m}(k,\delta) = \exp\left\{\frac{-j2\pi r}{N}\left(\frac{(k \pm m\Delta)(k \pm m\Delta + 1)}{2} + qk\right)\right\} \times \exp\left\{\frac{-j2\pi r}{N}(-ku\delta)\right\} \times Const \quad \cdots \quad (\mathrm{Equation}\ 15)$$

Above equation 15 is equivalent to the ZC sequence acquired by applying phase rotation corresponding to the frequency difference δ, to the ZC sequence in the time domain. Therefore, phase rotation applying section 401 applies phase rotation corresponding to the frequency difference δ, to the ZC sequence in the time domain. That is, as shown in following equation 16, phase rotation is applied to the ZC sequence of above equation 5 in the time domain, and the ZC sequence is transmitted.

[16]

$$f_{r,m}(k,0) \times \exp\left\{\frac{-j2\pi r}{N}(-ku\delta)\right\} \quad \cdots \quad (\mathrm{Equation}\ 16)$$

Further, it is clear from the relationship of the Fourier transform pair in equation 12 that applying the cyclic shift corresponding to the frequency difference δ between the reference point and the transmission band of the reference signal, to the ZC sequence in frequency domain, is equivalent to applying phase rotation corresponding to the frequency difference δ, to the ZC sequence in the time domain. That is, a channel estimation result will be the same as the result of equation 14.

In this way, according to Embodiment 4, by applying phase rotation corresponding to the frequency difference δ between the reference point and the transmission band of the reference signal, to the ZC sequence in the time domain, it is possible on the receiving side to make interference wave peaks from neighboring cells appear outside detection windows for desired wave peaks and separate cell-specific signals, so that it is possible to improve channel estimation precision.

Further, $(r \times u) \bmod N = N- 1 = -1 \pmod N$, $r, u = 1, 2, ..., N-1$ holds between the sequence numbers r and u of the Fourier transform pair of the ZC sequence, so that equation 16 can be represented by equation 17.

[17]

$$f_{r,m}(k,0) \times \exp\left\{\frac{-j2\pi}{N}(k\delta)\right\} \quad \dots \quad (\mathrm{E\,q\,u\,a\,t\,i\,o\,n} \ 17)$$

Further, reference signal generating section 108 shown in FIG.17 may employ a configuration where the cyclic shift applying section shown in FIG.15 is changed to a phase rotation applying section. The operation of the phase rotation applying section is the same as described above. FIG.15A shows a configuration where the phase rotation applying section and cyclic shift section are arranged before a DFT section, and the phase rotation applying section applies phase rotation corresponding to the frequency difference $\delta$ between the reference point and the transmission band of the reference signal, to the ZC sequence in the time domain.

Further, a configuration is possible as shown in FIG.15B where a cyclic shift section and phase rotation applying section are arranged after an IFFT section, and a configuration is also possible as shown in FIG.15C where a cyclic shift section is provided prior to a DFT section and a phase rotation applying section is arranged after the IFFT section. Furthermore, a configuration is also possible where a phase rotation applying section is arranged before a DFT section and a cyclic shift section is arranged after an IFFT section. Still further, if a phase rotation applying section is arranged after an IFFT section, phase rotation corresponding to the frequency difference $\delta$ is changed to the amount of phase rotation for performing over-sampling, and is applied to an input signal in the time domain. Moreover, the order of the phase rotation applying section and cyclic shift section may be altered in the above configuration.

(Embodiment 5)

A case will be explained with Embodiment 5 of the present invention where a sequence cyclically extending a CAZAC sequence ("cyclic extension"), or a sequence truncating a CAZAC sequence ("truncation"), is utilized as the reference signal of Embodiment 1. The present embodiment will be explained below using a ZC sequence, which is one kind of CAZAC sequences. However, the configurations of the terminal and base station according to Embodiment 5 are the same as the configurations shown in FIG.7 and FIG.9 according to Embodiment 1 except for reference signal generating section 108, and therefore will be explained employing FIG.7 and FIG.9.

Generally, a ZC sequence, which has the sequence length N of a prime number, is adjusted to the number of subcarriers in the RB transmission band, and, therefore, studies for the method of cyclically extending the ZC sequence having the length of a prime number to generate a reference signal having the number of subcarriers in that RB transmission band, are going on. Further, similar to this, studies for a method of cutting, that is, truncating, the ZC sequence having the length of a prime number to generate a reference signal having the number of subcarriers in that RB transmission band, are going on. Now, reference signals that are generated by respective methods will be explained below.

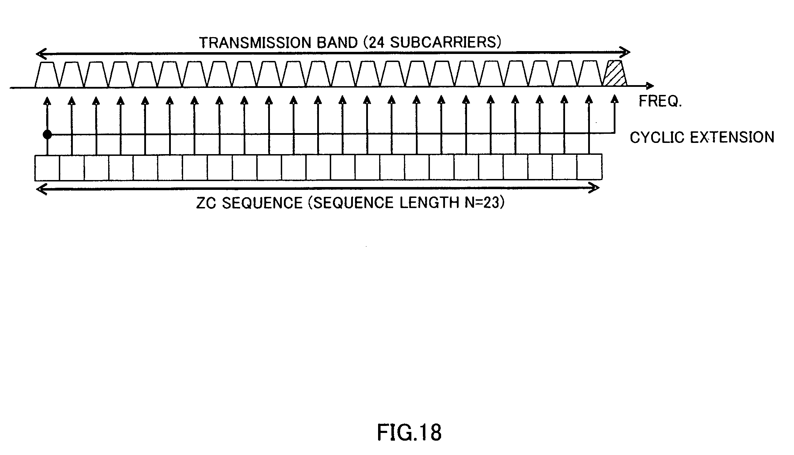

FIG.18 shows a reference signal generated by cyclically extending a ZC sequence in the frequency domain. The reference signal generated by cyclically extending the ZC sequence is generally configured to utilize the ZC sequence having the sequence length of a maximum prime number that does not exceed the number of subcarriers matching the RB transmission bandwidth, and adjust part of this ZC sequence to the number of transmission subcarriers of the reference signal and repeat this part of the ZC sequence. For example, as shown in FIG.18, when the number of subcarriers for transmitting the reference signal is 24, a ZC sequence having a sequence length N=23 is adopted. Then, to adjust this ZC sequence to the number of subcarriers, one symbol at the head of the selected ZC sequence is added to the tail of the ZC sequence to generate the reference signal of 24 subcarriers in total. Further, a configuration may be possible where one symbol at the tail of a ZC sequence is added to the head of the ZC sequence.

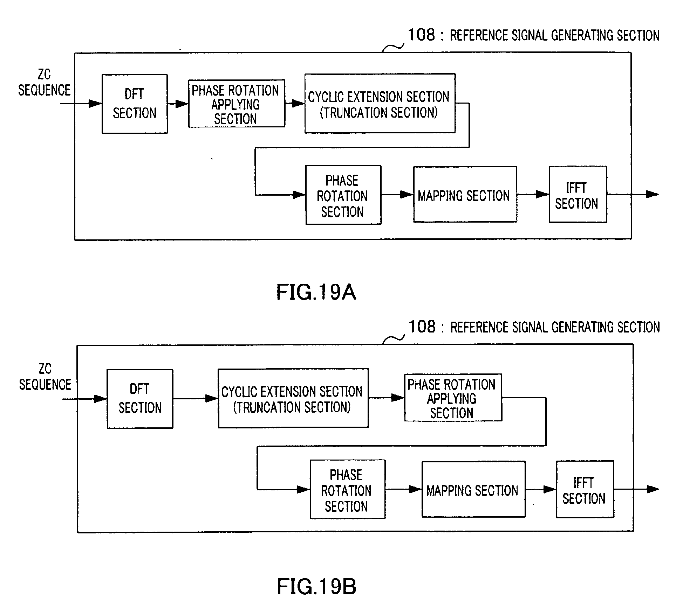

Next, reference signal generating section 108 in case where a cyclically extended reference signal, is used will be explained using FIG.19A. Reference signal generating section 108 of the present embodiment differs from reference signal generating section 108 of Embodiment 1 in adding the cyclic extension section.

The cyclic extension section is arranged after the phase rotation applying section, and receives as input a signal generated in the phase rotation applying section and performs the above-described cyclic extension processing of this input signal. For example, when there are 24 subcarriers in the RB transmission band, the phase rotation applying section applies phase rotation of equation 4 to the ZC sequence of the sequence length N=23 and outputs the ZC sequence to the cyclic extension section. Here, k is 0, 1, ..., and 22 (= sequence length -1). The cyclic extension section performs cyclic extension processing of the input signal from the phase rotation applying section as described above, and outputs a symbol of 24 subcarriers to the phase rotation section.

Further, it takes the sequence length for the phase rotation applied in the phase rotation applying section to finish a round, and therefore phase rotation is applied continuously to subcarriers by cyclically extending the ZC sequence outputted from the phase rotation applying section. For example, when there are 24 subcarriers in the RB transmission band, assume that phase rotation of $2\pi/23(=2\pi k/N)$ is applied to the first sample of the ZC sequence. At this time, phase rotation of $2\pi*24/23$, that is, phase rotation of $2\pi/23$, is applied to the 24th sample. This is equivalent to cyclically extending the first sample.

Further, as shown in FIG.19B, a configuration is also possible where a cyclic extension section is arranged after a DFT section. This is because, even if phase rotation is applied to a ZC sequence in the phase rotation applying section after cyclic extension, this ZC sequence becomes the same ZC sequence as in FIG.19A. In this case, the cyclic extension section cyclically extends the sequence received as input from the DFT section, and the phase rotation applying section applies phase rotation of equation 8 to the sequence received as input from the cyclic extension section. Further, the phase rotation applying section applies phase rotation to the sequence together with the sample cyclically extended in the cyclic extension section. For example, when there are 24 subcarriers in the RB transmission band, the ZC sequence of the sequence length N=23 is cyclically extended to match the 24 subcarriers, and equation 8 is applied to this extended signal. Here, k is 0, 1, ..., and 23 (= (the number of subcarriers in the RB transmission band)-1).

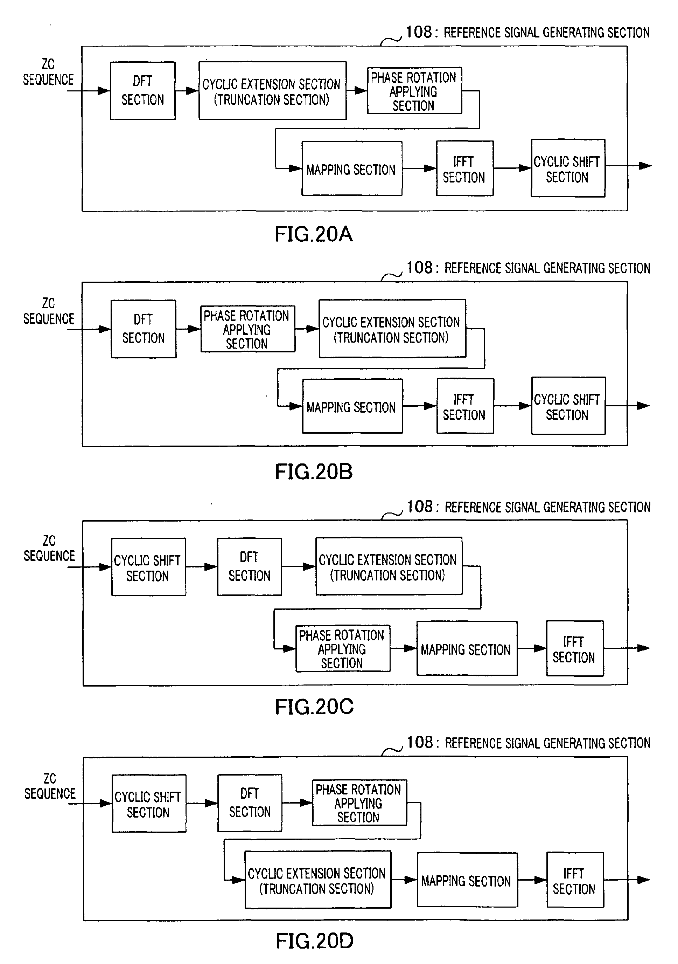

Further, as shown in FIG.20, the phase rotation section utilized to generate a ZC-ZCZ sequence may be configured to utilize a cyclic shift section in the time domain. Here, FIG.20A and FIG.20B show configurations where a cyclic shift section is arranged after an IFFT section, and FIG.20C and FIG.20D show configurations where a cyclic shift section is arranged before a DFT section. Further, the processings in the phase rotation applying section and cyclic extension section are the same as the processings in FIG.19.

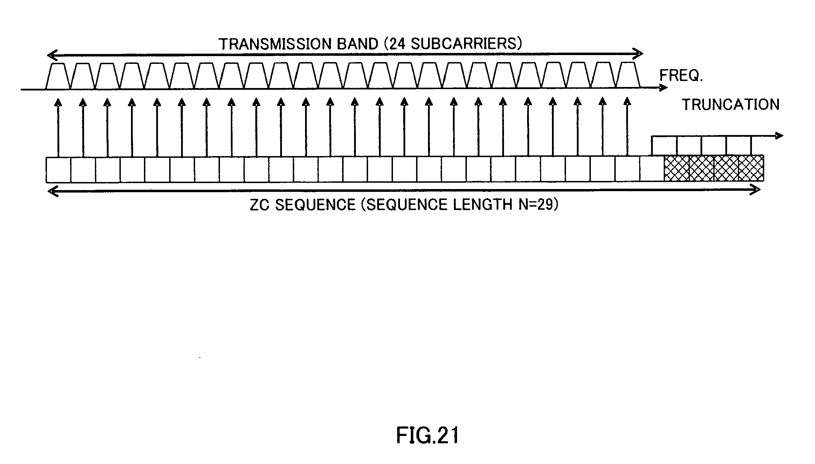

FIG.21 shows a reference signal generated by truncating a ZC sequence. The reference signal is generated by truncating the ZC sequence by utilizing the ZC sequence having the sequence length of a minimum prime number that does not go below the number of subcarriers in the RB transmission band, and by truncating (cutting) part of this ZC sequence to match the number of subcarriers in the RB transmission band. For example, when there are 24 subcarriers in the RB transmission band, the ZC sequence of the sequence length N=29 is selected. Then, 5 symbols of this ZC sequence are truncated to match the number of subcarriers. Further, a configuration is possible either where 5 symbols are truncated from the head or where a total of five symbols from the head and tail of the ZC sequence are truncated.

The configuration and operation of reference signal generating section 108 in case where the reference signal generated by truncation is used, will be explained using FIG.19A. However, an explanation will be made assuming that the cyclic extension section in FIG.19A is changed to a truncation section. For example, when there are 24 subcarriers in the RB transmission band, the phase rotation applying section applies phase rotation of equation 8 to the ZC sequence of the sequence length N=29, and outputs the ZC sequence to the truncation section. Here, k is 0, 1, ..., and 28 (=sequence length - 1). The truncation section performs truncation processing of the input signal from the phase rotation applying section as described above, and outputs a symbol of 24 subcarriers to the phase rotation section.

Further, as shown in FIG.19B, a configuration is possible where a truncation section (here, the cyclic extension section is changed to the truncation section) is arranged after a DFT section. This is because, even if phase rotation is applied to a ZC sequence in the phase rotation applying section after truncation, this ZC sequence becomes the same ZC sequence as in FIG.19A. In this case, the phase rotation applying section receives as input the truncated ZC sequence and applies phase rotation of equation 8 to this input signal. For example, when there are 24 subcarriers in the RB transmission band, the ZC sequence of the sequence length N=29 is truncated to match the 24 subcarriers, and equation 8 is applied to the truncated signal. Here, k is 0, 1, ..., and 23 (= (the number of subcarriers in the RB transmission band) - 1).

Further, as shown in FIG.20, the phase rotation section that is utilized to generate a ZC-ZCZ sequence may be configured to utilize a cyclic shift section in the time domain. Here, FIG.20A and FIG.20B show configurations where a cyclic shift section is arranged after an IFFT section, and FIG.20C and FIG.20D show configurations where a cyclic shift section is arranged before a DFT section. Further, the processings in the phase rotation applying section and cyclic extension section or the processing in the truncation section is the same as the processings in the configuration shown in FIG.19.

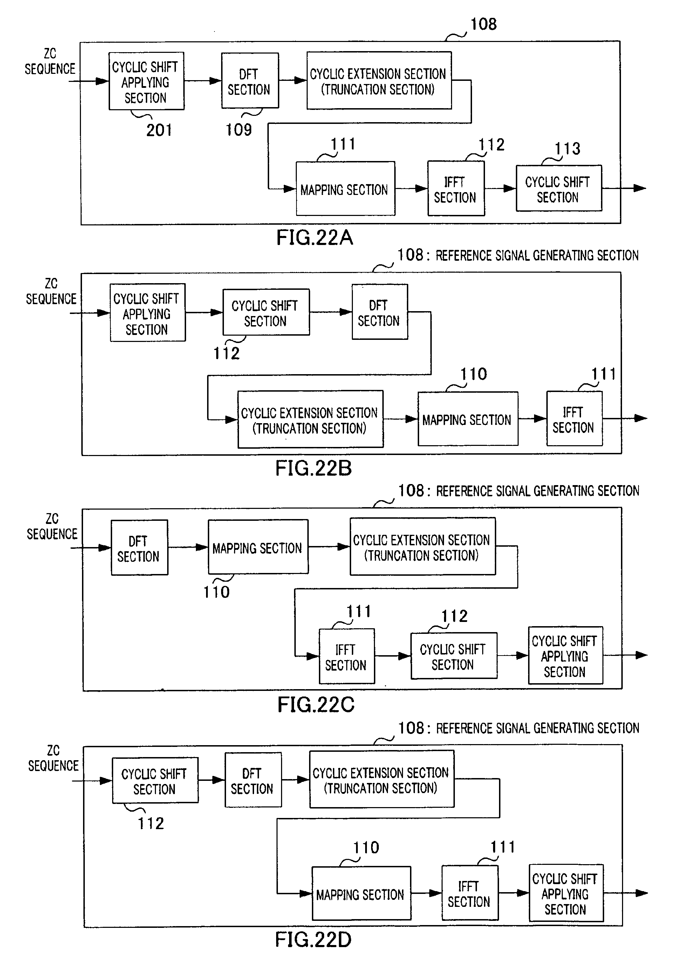

Furthermore, cyclic extension and truncation are applicable to Embodiments 2 to 4 in the same way. For example, if cyclic extension or truncation is applied to the ZC sequence in Embodiment 2, a cyclic extension section or truncation section is arranged after a DFT section shown in FIG.14 and FIG.15. The cyclic extension section or truncation section cyclically extends or truncates a signal outputted from the DFT section to match the number of subcarriers in the RB transmission band (see FIG.22).

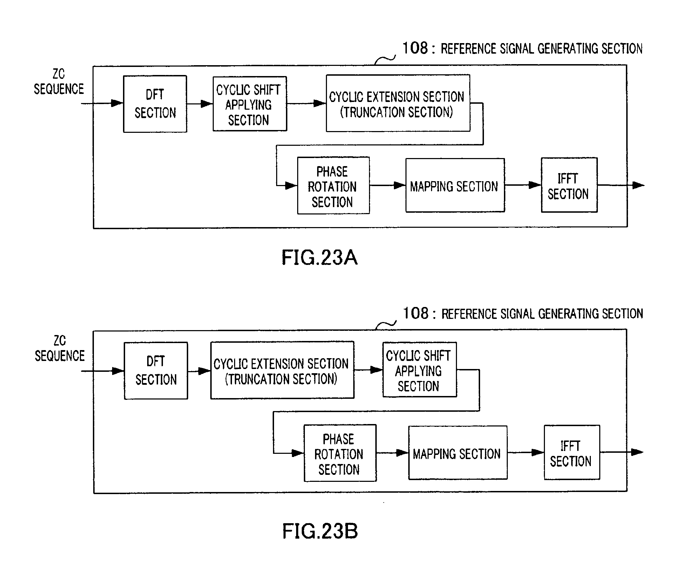

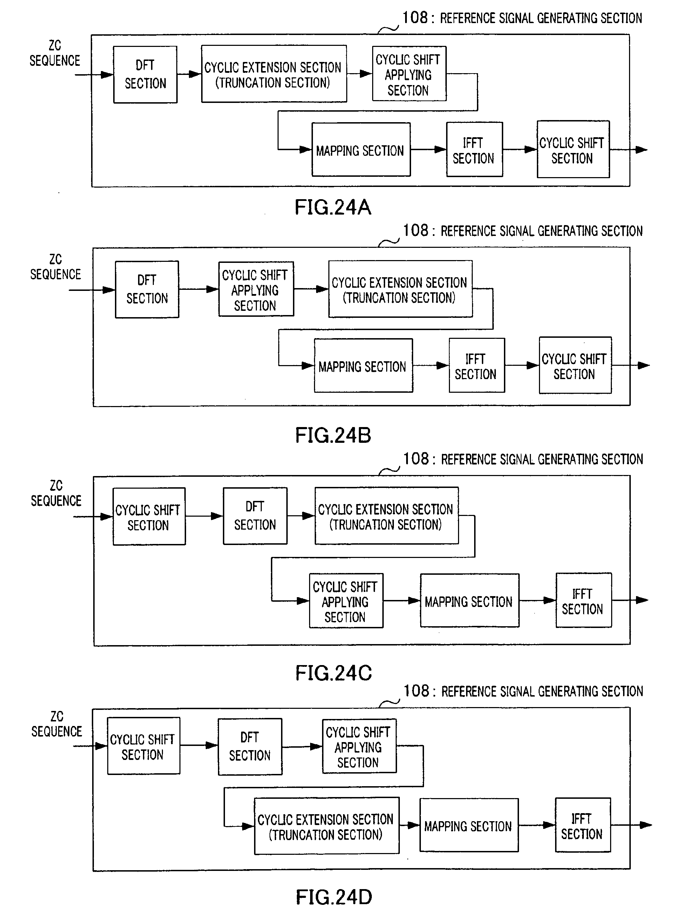

Further, if cyclic extension or truncation is applied to a ZC sequence in Embodiment 3, a configuration is employed where the phase rotation applying section in FIG.19 and FIG.20 is changed to a cyclic shift applying section. Here, the processings in the cyclic extension section and the truncation section are the same as the processing explained using FIG.19 and FIG.20. That is, in FIG.19A, the cyclic extension section is arranged after the cyclic shift applying section to cyclically extend the signal generated in the cyclic shift applying section. Further, in FIG.19B, a cyclic shift applying section is arranged after a cyclic extension section to cyclically shift the cyclically extended ZC sequence (see FIG.23 and FIG.24).

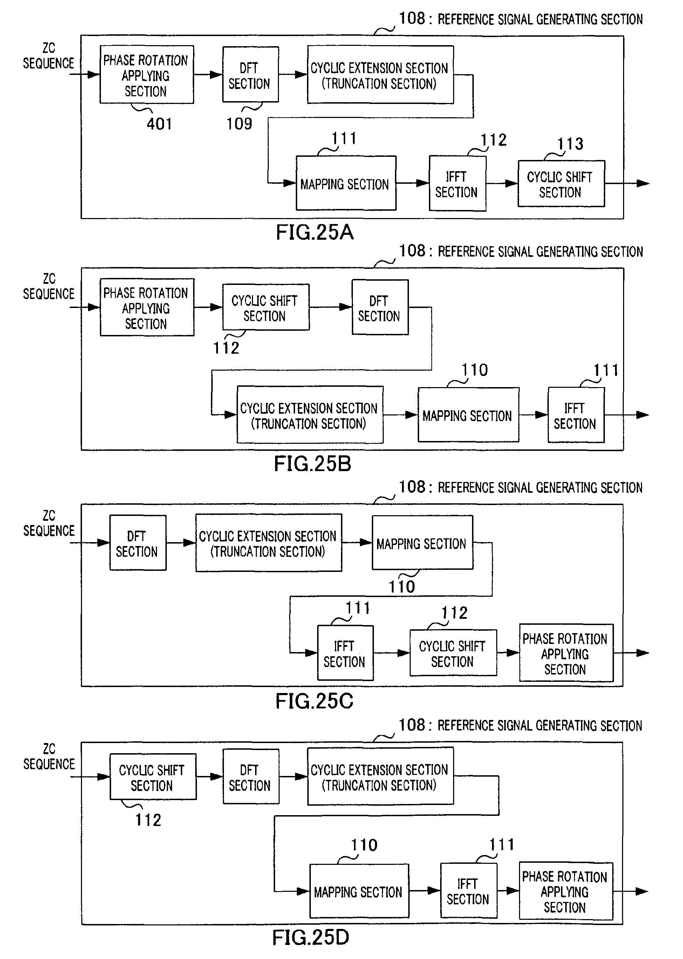

Further, if cyclic extension or truncation is applied to a ZC sequence in Embodiment 4, a cyclic extension section or truncation section is arranged after the DFT section shown in FIG.17. Further, the same arrangement is employed in the configuration where the cyclic shift applying section shown in FIG.15 is changed to a phase rotation applying section. The cyclic extension section or truncation section cyclically extends or truncates the output signal from the DFT section to match the number of subcarriers in the RB transmission band (see FIG.25).

Further, the ZC sequence may be cyclically extended or truncated in the time domain, not in the frequency domain. In this case, Embodiment 5 is the same as Embodiments 1 to 4 except that a cyclic extension section or truncation section is arranged before DFT section 109 in the same configuration as in Embodiments 1 to 4.

In this way, according to Embodiment 5, when a ZC sequence is cyclically extended or truncated to generate a sequence of a reference signal, similar to Embodiments 1 to 4, it is possible on the receiving side to make interference wave peaks from neighboring cells appear outside detection windows for desired wave peaks and separate cell-specific signals, so that it is possible to improve channel estimation precision.

Further, although the present embodiment has been explained assuming that the length of the ZC sequence is N=23 or N=29, the present invention is not limited to this.

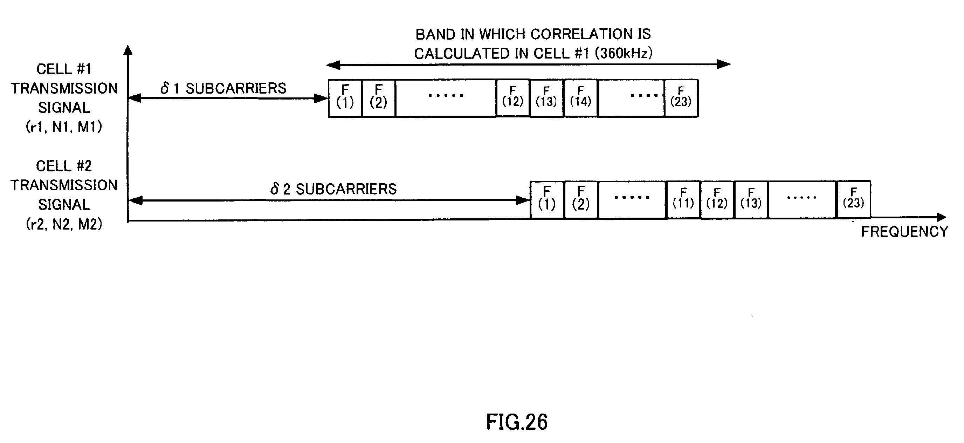

Furthermore, with the above embodiments, even in case of the same sequence length u1/N1=u2/N2, it is possible to improve channel estimation precision. For example, assuming a case where the same sequence length of the same sequence number is used in a plurality of cells in which frame synchronization is established and different cyclic shift sequences are used in each cell, the base station performs scheduling on a per cell basis and allocates frequency resources to each terminal and, therefore, as shown in FIG.26, there is a high possibility that ZC sequences are transmitted in different transmission bands in neighboring cells. As a result, interference wave peaks appear in different positions and, if these peaks move in detection windows for desired waves, channel estimation precision deteriorates. In such cases, by using the above embodiments, interference wave peaks are prevented from appearing in detection windows for desired waves, so that it is possible to improve channel estimation precision.

Further, the present invention may be applied between sequences of one bandwidth alone. When the present invention is employed to solve a problem between sequences of one bandwidth instead of solving a problem between sequences of a plurality of bandwidths, the essential requirement is that a common reference point is provided in one bandwidth instead of providing the common reference point between a plurality of bandwidths. For example, the present invention may be applied to the sequence length N=23 alone, and, in this case, the essential requirement is that a common reference point is provided only for ZC sequences of the sequence length N=23.

Further, although cases have been explained with the above embodiments where the common reference point is set in all cells in which frame synchronization is established, the present invention is not limited to this, and the common reference point may be set in cells in which frame synchronization is not established. Furthermore, regardless of the minimum transmission bandwidth and so on supported by each terminal, the common reference point may be set in all cells in which frame synchronization is established as well as in each transmission bandwidth.

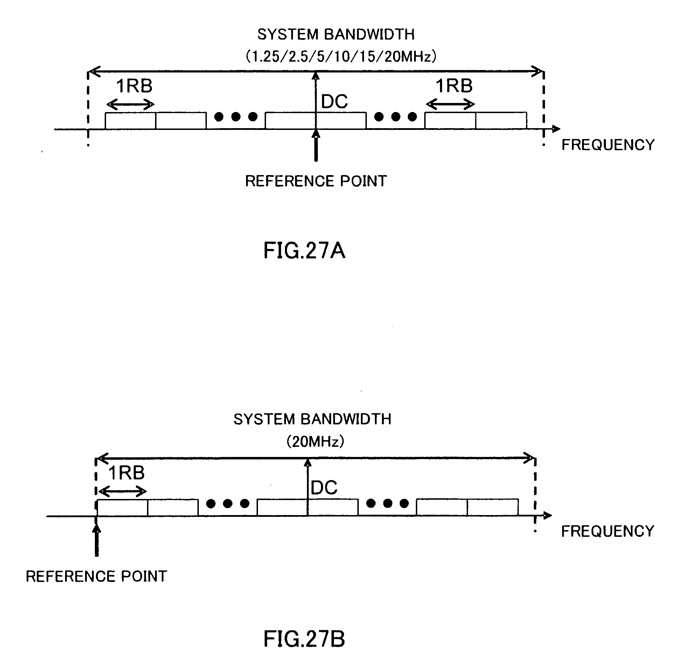

As shown in FIG.27A, this reference point may be a DC component subcarrier in a system transmission bandwidth or, as shown in FIG.27B, may be a subcarrier at one end of a system transmission bandwidth (for example, 20MHz). Further, in this case, terminals that do not support the system transmission band (20MHz) use the subcarrier at one end of the system transmission bandwidth (20MHz) as the reference point.

Furthermore, as long as the common frequency (i.e. absolute value) or subcarrier is used as the reference point between cells, it is possible to select an arbitrary frequency (i.e. subcarrier) as the reference point. The frequency (i.e. subcarrier) that serves as the reference point may be provided outside the system band.

Further, although cases have been explained with the above embodiments where a method of allocating different cyclic shift sequences (m) of the same sequence number (u) between cells in which frame synchronization is established (for example, cells that belong to the same base station) and a grouping method of allocating sequences of high cross-correlation to the same cell are combined, the present invention is not limited to this, and the present invention is also applicable to cases where sequence numbers of high cross-correlation are used in cells in which frame synchronization is established.

Furthermore, phase rotation or cyclic shift corresponding to the frequency difference $\delta$ between the reference point and transmission band in the above embodiments may be set in the term of qk for the ZC sequence. To be more specific, by using the phase rotation term added in the above embodiments as the term of qk in above equation 4, following equation 18 is given.

[18]

$$F_{u,m}(k) = \exp\left\{\frac{-j2\pi u}{N}\left(\frac{k(k+1)}{2}+k\delta\right)\pm\frac{j2\pi\Delta m}{N}k\right\}, \quad when\ N\ is\ odd,\ k=0,1,...,N-1 \quad \cdots \quad (Equation\ 18)$$

Further, it is possible to generate a ZC sequence using an adequate term of qk and then apply phase rotation or cyclic shift to this ZC sequence as described in Embodiments 1 to 4, or it is also possible to apply phase rotation or cyclic shift to qk as described in Embodiments 1 to 4 upon generation of a ZC sequence. Furthermore, a ZC sequence may be represented by following equation 19.

[19]

$$F_{u,m}(k) = \exp\left\{\frac{-j2\pi u}{N}\left(\frac{(k\pm m)(k\pm m+1)}{2}+k\delta\right)\right\}, \quad when\ N\ is\ odd,\ k=0,1,...,N-1 \quad \cdots \quad (Equation\ 19)$$

Still further, above equation 11 may be used in the form of following equation 20.

[20]

$$f_{r,m}(k,\delta) = \exp\left\{\frac{-j2\pi r}{N}\left(\frac{(k\pm m\Delta)(k\pm m\Delta+1)}{2}+(-u\delta)k\right)\right\}, \quad when\ N\ is\ odd,\ k=0,1,...,N \quad \cdots$$

$$(Equation\ 20)$$

In the above embodiments, as shown in the above equation, the reference signal generating section of a terminal generates a reference signal represented as a ZC sequence. The reference signal to be generated is a ZC sequence represented by four variables of the sequence length N determined according to the transmission bandwidth, the sequence number allocated to each cell (the sequence number u in the frequency domain or the sequence number r in the time domain), the amount of cyclic shift $\Delta m$ allocated to each cell, and $\delta$ determined according to the transmission band. In this way, each terminal can maintain the relative relationships with reference signals transmitted from other terminals by generating the ZC sequence using the transmission bandwidth (i.e. sequence length), the transmission band (i.e. the frequency difference from the reference point), the sequence number and the amount of cyclic shift, so that it is possible to improve channel estimation precision in the base station.

Further, there are cases where above equation 3 is represented by following equation 21.

[21]

$$F_{u,m}(k) = \exp\left\{\frac{j2\pi u}{N}\left(\frac{k(k+1)}{2}+qk\right)\pm\frac{j2\pi\Delta m}{N}k\right\}, \quad when\ N\ is\ odd,\ k=0,1,...,N-1 \quad \cdots$$

$$(Equation\ 21)$$

In this case, above equation 4 is represented by following equation 22.

[22]

$$F_{u,m}(k+\delta) = \exp\left\{\frac{j2\pi u}{N}\left(\frac{k(k+1)}{2}+qk\right)\pm\frac{j2\pi\Delta m}{N}k\right\}\times\exp\left\{\frac{j2\pi u}{N}\left(\frac{\delta(\delta+1)}{2}+q\delta\right)\pm\frac{j2\pi\Delta m}{N}\delta\right\}\times\exp\left\{\frac{j2\pi u}{N}(k\delta)\right\}$$

$$\cdots\ (Equation\ 22)$$

That is, in case of Embodiment 1, phase rotation is applied to above equation 21 and equation 21 is transmitted. This is shown in following equation 23.

[23]

$$F_{u,m}(k) \times \exp\left\{\frac{j2\pi u}{N}(k\delta)\right\} \quad \cdots \text{ (Equation 23)}$$

Further, above equation 10 and above equation 11 are represented by following equation 24 and equation 25, respectively, and equation 25 applies cyclic shift (-u$\delta$) to the ZC sequence of equation 24 in the time domain and is transmitted.

[24]

$$f_{r,m}(k,0) = \exp\left\{j\frac{2\pi r}{N}\left(\frac{(k \pm m\Delta)(k \pm m\Delta + 1)}{2} + qk\right)\right\}, when\ N\ is\ odd, k = 0,1,\dots,N-1 \quad \cdots$$

(Equation 24)

[25]

$$f_{r,m}(k,\delta) = \exp\left\{j\frac{2\pi r}{N}\left(\frac{(k \pm m\Delta - u\delta)(k \pm m\Delta - u\delta + 1)}{2} + qk\right)\right\} \times Const \quad \cdots \text{ (Equation}$$

$$when\ N\ is\ odd, k = 0,1,\dots,N-1$$

25)

Furthermore, above equation 13 is represented by following equation 26, and applies cyclic shift ($\delta$) to the ZC sequence of above equation 21 in the frequency domain and is transmitted.

[26]

$$F_{u,m}(k+\delta) = \exp\left\{\frac{j2\pi u}{N}\left(\frac{(k+\delta)(k+\delta+1)}{2} + qk\right) \pm \frac{j2\pi\Delta m}{N}k\right\} \times Const \quad \cdots \text{ (Equation 26)}$$

Still further, above equation 15 is represented by following equation 27, and applies phase rotation to the ZC sequence of above equation 24 as in equation 28 and is transmitted.

[27]

$$f_{r,m}(k,\delta) = \exp\left\{\frac{j2\pi r}{N}\left(\frac{(k \pm m\Delta)(k \pm m\Delta + 1)}{2} + qk\right)\right\} \times \exp\left\{\frac{j2\pi r}{N}(-ku\delta)\right\} \times Const \quad \cdots \text{ (Equation 27)}$$

[28]

$$f_{r,m}(k,0) \times \exp\left\{\frac{j2\pi r}{N}(-ku\delta)\right\} \quad \cdots \text{ (Equation 28)}$$

Although a case has been explained where the reference point used to generate sequences is common between a plurality of cells, it is equally possible to apply a common reference point between cells in which the influence of interference needs to be reduced and apply the common reference point to all cells. Further, a plurality of reference points may be set.

Although examples have been explained with the above embodiments where the sequence length of ZC sequences is an odd number, the ZC sequence of the sequence length having an even number may be used. Further, the present invention is applicable to GCL (Generalized Chirp Like) sequences including ZC sequences. Further, the present invention is also applicable to other CAZAC sequences or binary sequences that use cyclic shift sequences or ZCZ sequences for symbol sequences. For example, the present invention may employ Frank sequences, other CAZAC sequences and PN sequences such as M sequences (including sequences generated by a calculator) and Gold sequences.

Further, although cases have been explained with the above embodiments where CAZAC sequences and their cyclic shift sequences are utilized as uplink reference signals, the present invention is not limited to this. For example, the present invention is also applicable to cases where cyclic shift is applied to uplink channel estimation reference signal, random access preamble sequence, downlink synchronization channel reference signal to transmit in different transmission bands between cells.

Further, the present invention is also applicable to cases where a CAZAC sequence is used as spreading code in code division multiplex ("CDM") or in code division multiple access ("CDMA"), and it is possible to prevent the relative relationships between the positions of sequences upon correlation calculation from collapsing when RB transmission bands are different, and prevent interference wave peaks from appearing in detection windows for desired wave peaks.

Further, Embodiments 1 to 5 are examples of the method of maintaining the relative relationships between cyclic shifts and the present invention is not limited to this as long as the method is directed to maintaining the relative relationships between cyclic shifts. That is, any method is possible as long as the method produces a correlation result of interference wave components as $\exp\{-j2\pi(m\_a-m\_b)\Delta/N\}$ x Const of above equation 7 using the common reference point (i.e. frequency or subcarrier) between a plurality of cells.

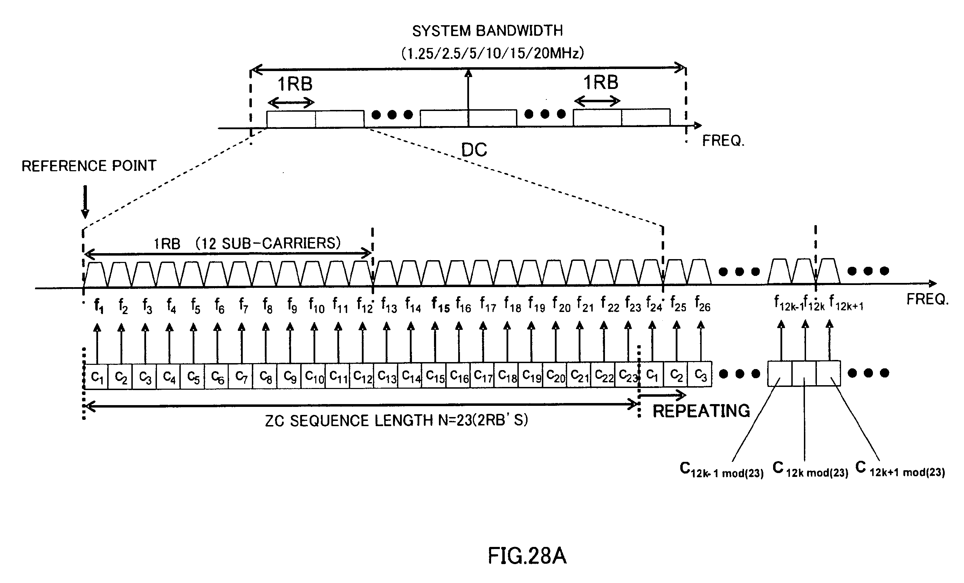

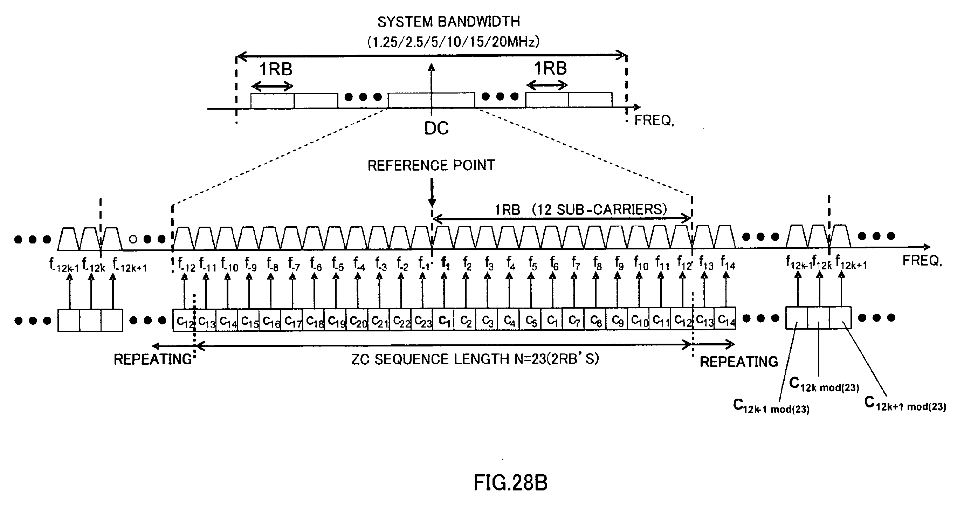

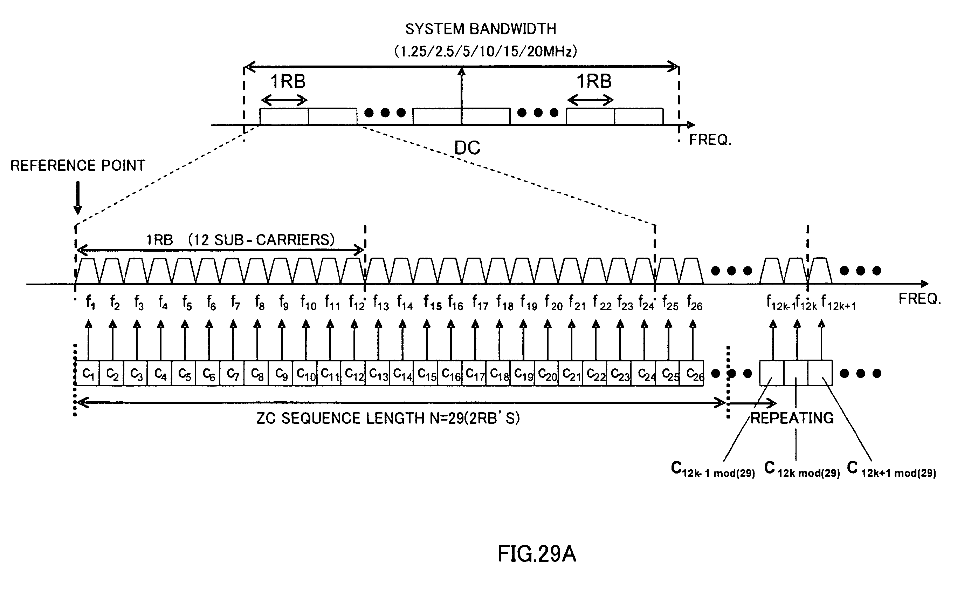

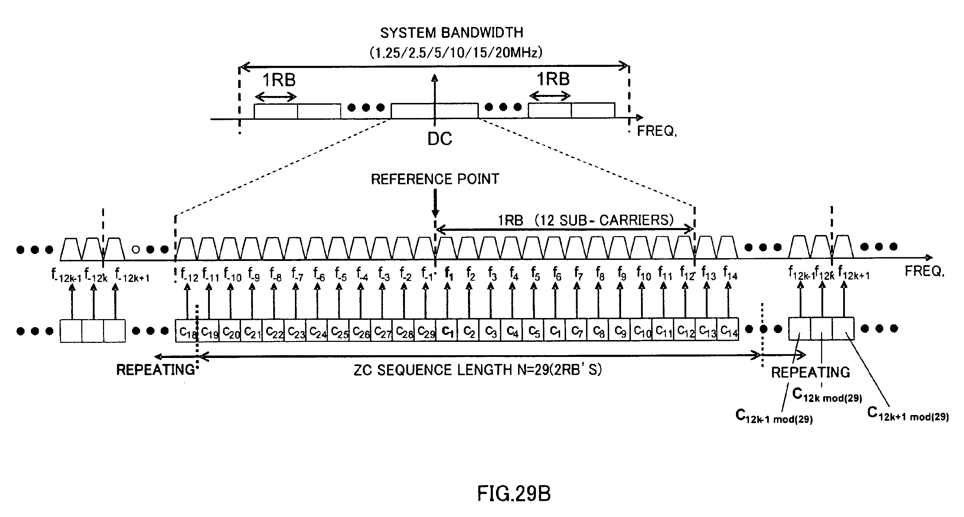

Further, as shown in FIG.28A, FIG.28B, FIG.29A and FIG.29B, equation 13 shown in above Embodiment 3 may be interpreted such that k index coefficients (represented by Ck) of a ZC sequence are associated on a one to one basis. Here, FIG.28 shows a case of cyclic extension (where the RB transmission band is 2RB's) where k index coefficients 1 to 23 from the reference point are repeated in order and are associated with subcarriers on a one-to-one basis. FIG. 29 shows the case of truncation where k index coefficients 1 to 29 from the reference point are repeated in order, and are associated with subcarriers on a one-to-one basis. Further, FIG.28A and FIG.29A show cases where a subcarrier at one end of the system transmission band is the reference point, and FIG.28B and FIG.29B show cases where a subcarrier in the center of the system transmission band is the reference point.

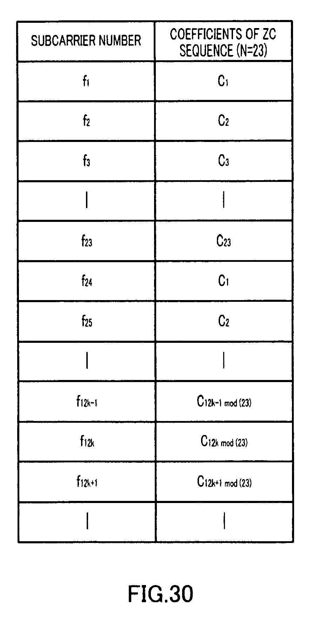

Further, the relationship between k index coefficients of a transmission ZC sequence and subcarriers in FIG. 28A is as shown in FIG.30. That is, assuming that fo is the reference point and $f_a$ is the subcarrier number, the k index coefficient $C_a$ of the ZC sequence of the subcarrier $f_a$ provides the relationship of $C_a=C_a \bmod(23)$ (a case of the sequence length N=23 is assumed here). Further, $C_a=C_a \bmod(X)$ is a remainder obtained by dividing $C_a$ by X. Cyclic shift applying section 301 cyclically shifts an input signal such that this relationship is satisfied.

Further, although examples have been described with the above examples where mobile stations transmit data and reference signals to a base station, the present invention is also applicable to the case where a base station transmits data and reference signals to mobile stations.

(Embodiment 6)

The configuration of terminal 100 according to Embodiment 6 of the present invention will be explained using FIG.7. RF receiving section 102 performs reception processing such as down-conversion and AD conversion of a signal received through antenna 101, and outputs the signal subjected to reception processing, to demodulating section 103. Demodulating section 103 performs equalization processing and demodulation processing of the signal outputted from RF receiving section 102, and outputs the signal subjected to these processings, to decoding section 104. Decoding section 104 performs decoding processing of the signal outputted from demodulating section 103, and extracts a data signal and control information. Further, in the extracted control information, decoding section 104 outputs the RB (Resource Block) allocation information to phase rotation applying section 110 and mapping section 111 of reference signal generating section 108.

Encoding section 105 encodes transmission data and outputs the encoded data to modulating section 106. Modulating section 106 modulates the encoded data outputted from encoding section 105, and outputs the modulated signal to RB allocating section 107. RB allocating section 107 allocates the modulated signal outputted from modulating section 106, to an RB, and outputs the modulated signal allocated to the RB, to multiplexing section 114.

Reference signal generating section 108 has DFT section 109, phase rotation applying section 110, mapping section 111, IFFT section 112, and cyclic shift section 113, and generates a reference signal from a ZC sequence based on the RB allocation information outputted from decoding section 104 and outputs the generated reference signal to multiplexing section 114. The configuration inside reference signal generating section 108 will be explained below.

DFT section 109 performs DFT processing of a ZC sequence outputted from the ZC sequence generating section (not shown) that generates ZC sequences, converts the ZC sequence from a time domain signal into a frequency domain signal, and outputs the ZC sequence converted into the frequency domain, to phase rotation applying section 110. Here, using RB allocation information in the control information extracted in decoding section 104, the ZC sequence generating section (not shown) specifies a transmission bandwidth, and specifies the ZC sequence length N matching the transmission bandwidth. Further, the ZC sequence generating section specifies a sequence number using information in the control information extracted in decoding section 104 that shows the sequence number allocated to the cell to which terminal 100 belongs. Using these sequence length N and sequence number u, the ZC sequence generating section generates a ZC sequence and outputs the ZC sequence to DFT section 109.

Using the frequency determined in the system band for convenience as the reference point, phase rotation applying section 110 applies phase rotation corresponding to the frequency difference δ between the reference point and the transmission band of the reference signal, to the ZC sequence outputted from DFT section 109, and outputs the ZC sequence to which phase rotation is applied, to mapping section 111.

Mapping section 111 maps the ZC sequence outputted from phase rotation applying section 110 upon the band matching the transmission band of terminal 100, based on RB allocation information outputted from decoding section 104, and outputs the mapped ZC sequence to IFFT section 112. IFFT section 112 performs IFFT (Inverse Fast Fourier Transform) processing of the ZC sequence outputted from mapping section 111, and outputs the ZC sequence subjected to IFFT processing, to cyclic shift section 113.

Cyclic shift section 113 cyclically shifts the ZC sequence outputted from IFFT section 112, based on a predetermined amount of shift, and outputs the cyclically shifted ZC sequence to multiplexing section 114 as a reference signal. The amount of shift is determined using, for example, control information reported from the base station.

Multiplexing section 114 time-multiplexes the transmission data (i.e. modulated signal) outputted from RB allocating section 107 and the ZC sequence (i.e. reference signal) outputted from cyclic shift section 113, and outputs a multiplex signal to RF transmitting section 115. Here, the multiplexing method in multiplexing section 114 is not limited to time-multiplexing, and frequency-multiplexing, code-multiplexing and IQ-multiplexing in complex space are also possible.

RF transmitting section 115 performs transmission processing such as D/A conversion, up-conversion and amplification of the multiplex signal outputted from multiplexing section 114, and transmits the signal subjected to transmission processing, from antenna 101 by radio.

Here, the reason why phase rotation is applied to the ZC sequence in reference signal generating section 108, will be explained. First, as shown in FIG. 8, when the transmission band of the ZC sequence is positioned δ subcarriers apart from the reference point, frequency domain representation of the ZC sequence that takes into account the reference point is provided by following equation 29.

[29]

$$F_{u,m}(k+\delta) = \exp\left\{\frac{-j2\pi u}{N}\left(\frac{k(k+1)}{2}+qk\right)\pm\frac{j2\pi\Delta m}{N}k\right\} \times \exp\left\{\frac{-j2\pi u}{N}\left(\frac{\delta(\delta+1)}{2}+q\delta\right)\pm\frac{j2\pi\Delta m}{N}\delta\right\} \times \exp\left\{\frac{-j2\pi u}{N}(k\delta)\right\} \quad \cdots$$

$$(\mathrm{E\,q\,u\,a\,t\,i\,o\,n\ 2\,9})$$

In above equation 29, N is the sequence length (i.e. prime number) and k is the subcarrier number (k=0, 1, 2, ..., and N-1). Further, in above equation 29, the first term on the right side represents the ZC sequence (i.e. $F_{u,m}(k)$ represented in equation 4) that does not take into account the transmission band, and the peak position is determined based on the amount of cyclic shift of the default settings. Furthermore, the second term is a constant term that does not depend on the subcarrier k and is not an element that moves the peak position. Still further, the third term is the phase rotation term that depends on the transmission band, and, thanks to this third term, even if elements of the cell-specific ZC sequence utilized upon correlation calculation and elements of ZC sequences of neighboring cells are allocated to different bands, it is possible to maintain the same relationship between the positions of these ZC sequences. Here, the phase rotation term of the third term depends on the transmission band, sequence number and sequence length for terminal 100, and does not depend on, for example, transmission bands for other terminals. That is, the essential requirement is that terminal 100 transmits the first term and the third term on the right side in above equation 29. For example, as shown in following equation 30, terminal 100 applies phase rotation of the third term to the first term and transmits the result.

[30]

$$F_{u.m}(k) \times \exp\left\{ \frac{-j2\pi u}{N}(k\delta) \right\} \quad \cdots \quad (\text{Equation } 30)$$

Here, it is also possible to add the constant term (i.e. the second term) on the right side of above equation 29, to the first term and transmit the result. Further, the constant term to add is not necessarily limited to the above. Furthermore, it is also possible to substitute k+δ for k on the left side of equation 4 and transmit the result by utilizing δ representing the frequency difference between the reference point and the transmission band of the reference signal transmitted from terminal 100.

Next, the configuration of base station 150 according to Embodiment 6 of the present invention, will be explained using FIG.9. Encoding section 151 encodes transmission data and a control signal, and outputs encoded data to modulating section 152. Modulating section 152 modulates encoded data, and outputs the modulated signal to RF transmitting section 153. RF transmitting section 153 performs transmission processing such as D/A conversion, up-conversion and amplification of the modulated signal, and transmits the signal subjected to transmission processing, from antenna 154 by radio.

RF receiving section 155 performs reception processing such as down-conversion and A/D conversion of the signal received at antenna 154, and outputs the signal subjected to reception processing, to demultiplexing section 156.

Demultiplexing section 156 demultiplexes the signal outputted from RF receiving section 155, to the reference signal, the data signal and the control signal, and outputs the demultiplexed reference signal to DFT (Discrete Fourier Transform) section 157 and outputs the data signal and control signal to DFT section 164.

DFT section 157 performs DFT processing of the reference signal outputted from demultiplexing section 156, converts the signal from a time domain signal into a frequency domain signal, and outputs the reference signal converted into the frequency domain, to demapping section 159 of channel estimation section 158.

Channel estimation section 158 has demapping section 159, dividing section 160, IFFT (Inverse Fast Fourier Transform) section 161, masking processing section 162 and DFT section 163, and estimates the channel based on the reference signal outputted from DFT section 157. The configuration inside channel estimation section 158 will be explained in detail below.

Demapping section 159 extracts the portion matching the transmission band of each terminal from the signal outputted from DFT section 157, and outputs each extracted signal to dividing section 160.

Dividing section 160 divides the signal outputted from demapping section 159 using the ZC sequence to which phase rotation corresponding to the frequency difference δ between the reference point and transmission band is applied, and outputs the division result (i.e. correlation value) to IFFT section 161. IFFT section 161 performs IFFT processing of the signal outputted from dividing section 160, and outputs the signal subjected to IFFT processing, to masking processing section 162.

Masking processing section 162, which is an extracting means, performs masking processing of the signal outputted from IFFT section 161 to extract the correlation value in the period (i.e. detection window) in which a correlation value of a desired sequence is present, and outputs the extracted correlation value to DFT section 163.

DFT section 163 performs DFT processing of the correlation value outputted from masking processing section 162, and outputs the correlation value subjected to DFT processing, to frequency domain equalizing section 166. Further, the signal outputted from DFT section 163 represents the frequency response of the channel.

DFT section 164 performs DFT processing of the data signal and control signal outputted from demultiplexing section 156, converts the signals from time domain signals into frequency domain signals and outputs the data signal and control signal converted into the frequency domain, to demapping section 165.

Demapping section 165 extracts the data signal and control signal of the portion matching the transmission band of each terminal, from the signals outputted from DFT section 164, and outputs each extracted signal to frequency domain equalizing section 166.

Frequency domain equalizing section 166 performs equalizing processing of the data signal and control signal outputted from demapping section 165 using the signal (i.e. the frequency response of the channel) outputted from DFT section 163 in channel estimation section 158, and outputs the signal subjected to equalizing processing, to IFFT section 167.

IFFT section 167 performs IFFT processing of the data signal and control signal outputted from frequency domain equalizing section 166, and outputs the signals subjected to IFFT processing, to demodulating section 168. Demodulating section 168 performs demodulation processing of the signals subjected to IFFT processing, and outputs the signals subjected to demodulation processing, to decoding section 169. Decoding section 169 performs decoding processing of the signals subjected to decoding processing, and extracts received data.

Here, dividing section 160 in channel estimation section 158 will be explained using an equation. A case will be assumed as an example where, as shown in FIG.10, a desired wave (i.e. the ZC sequence that utilizes u1 and N1in equation 6) is transmitted from cell #1, an interference wave (i.e. the ZC sequence that utilizes u2 and N2 in equation 6) is transmitted from cell #2 and these waves are combined and received at the base station. At this time, if the ZC sequence (u2 and N2), which is the interference wave, is divided by the ZC sequence (u1 and N1), which is the desired wave, in the dividing section, if a combination of high cross-correlation is provided, that is, if the relationship u1/N1≈u2/N2≈u/N is satisfied, the frequency response of an interference wave in dividing section 160 is represented by following equation 31.

[31]

$$\frac{F_{u2,M2,N2}(k) \times \exp\left\{\dfrac{-j2\pi u2}{N2}(k\delta2)\right\}}{F_{u1,M1,N1}(k+\delta2-\delta1) \times \exp\left\{\dfrac{-j2\pi u1}{N1}(k\delta1)\right\}} = \exp\left\{\dfrac{2\pi\Delta(m2-m1)}{N}k\right\} \times \exp\left\{\dfrac{-j2\pi u}{N}\left(\dfrac{\delta1^2-\delta1-\delta2^2+\delta2}{2}\right)\right\} \quad \cdots$$

$$(\mathrm{E\,q\,u\,a\,t\,i\,o\,n\ \ 3\,1})$$

In above equation 31, although the second term on the right side does not depend on a subcarrier and therefore is unrelated to the position of the interference wave peak, the first term on the right side can make the interference wave peak appear in a position (m2-m1)Δ samples apart from the desired wave peak in the time domain. By this means, as shown in FIG.11, it is possible to make the interference wave peak appear outside the detection window for the desired wave and separate the cell-specific signal, so that it is possible to improve channel estimation precision.

In this way, according to Embodiment 6, by setting the frequency that serves as the reference and using this frequency as the reference point to apply phase rotation corresponding to the frequency difference δ between the reference point and the transmission band of the reference signal, to the ZC sequence in the frequency domain, it is possible on the receiving side to make interference wave peaks from neighboring cells appear outside detection windows for desired wave peaks and separate cell-specific signals, so that it is possible to improve channel estimation precision. In other words, each terminal generates and transmits a reference signal using a ZC sequence according to the transmission band and transmission bandwidth, and the base station performs dividing processing using the ZC sequence which is transmitted from each terminal and which matches the transmission band and transmission bandwidth, so that it is possible to make interference wave peaks from neighboring cells and desired wave peaks appear in different detection windows.

Further, although the present embodiment has been explained assuming that reference signal generating section 108 in terminal 100 is as shown in FIG.7, the configurations shown in FIG.15A and FIG.15B may be possible. The phase rotation section shown in FIG.15A allocates the amount of phase rotation of the default settings matching the cyclic shift sequence, to each subcarrier. That is, instead of applying cyclic shift to generate the assigned cyclic shift sequence in the time domain, phase rotation is applied in the frequency domain based on the amount of phase rotation matching the amount of cyclic shift. Further, two of the phase rotation applying section and phase rotation section may not be configured to apply phase rotation separately. For example, one phase rotation section may be configured to apply phase rotation in the frequency domain based on the sum of the amount of phase rotation matching the amount of cyclic shift and the amount of phase rotation corresponding to the frequency difference δ between the reference point and the transmission band of the reference signal. Further, the order of the phase rotation applying section and phase rotation section may be altered. Further, as shown in FIG.15B, a configuration is also possible where a ZC sequence is cyclically shifted based on the predetermined amount of cyclic shift prior to conversion of the ZC sequence in the frequency domain. These configurations can also make interference wave peaks appear outside detection windows for a desired wave peaks.

Further, although a case has been explained above where ZC sequences are generated in the time domain, the present invention is not limited to this and the ZC sequences may be generated in the frequency domain. That is, a configuration is possible in which the ZC sequence generating section generates a ZC sequence in the frequency domain, and the phase rotation section applies to the generated ZC sequence in the frequency domain, phase rotation corresponding to the frequency difference δ between the reference point and the transmission band of the reference signal. Further, the present invention is not limited to these configurations.

(Embodiment 7)

Although a case has been explained above with Embodiment 6 where the reference point is set in all cells in which frame synchronization is established as well as in the transmission bandwidth of each terminal, and phase rotation corresponding to the frequency difference δ between the reference point and the transmission band of the reference signal is applied to the ZC sequence in the frequency domain, a case will be explained with Embodiment 7 of the present invention where cyclic shift corresponding to the frequency difference $\delta$ between the reference point and the transmission band of the reference signal, is applied to the ZC sequence in the time domain. Further, the configuration of the base station according to Embodiment 7 of the present invention is the same as the configuration of Embodiment 6 shown in FIG.9, and therefore detailed explanation thereof will be omitted.

The configuration of terminal 200 according to Embodiment 7 of the present invention will be explained using FIG.14. FIG.14 differs from FIG.7 in removing phase rotation applying section 110 and adding cyclic shift applying section 201.

Cyclic shift applying section 201 applies cyclic shift corresponding to the frequency difference $\delta$ between the reference point and the transmission band of a reference signal, to a ZC sequence, and outputs the ZC sequence to which the cyclic shift is applied, to DFT section 109. Hereinafter, the processing in cyclic shift applying section 201 will be explained using equations.

First, the ZC sequence in the time domain is generally represented by following equation 32.

[32]

$$f_{r,m}(k,0) = \exp\left\{\frac{-2\pi r}{N}\left(\frac{(k\pm m\Delta)(k\pm m\Delta+1)}{2}+qk\right)\right\}, when\ N\ is\ odd, k=0,1,...,N-1 \qquad \cdots$$

$(\mathrm{E\,q\,u\,a\,t\,i\,o\,n\ \ 3\,2})$

In equation 32, N is the sequence length, r is the ZC sequence number in the time domain, and N and r are coprime. Further, m is the cyclic shift number and $\Delta$ is the amount of cyclic shift.

Equation 32 converted in the time domain is represented by following equation 33. Here, "Const" represents a constant term.

[33]

$$f_{r,m}(k,\delta) = \exp\left\{\frac{-2\pi r}{N}\left(\frac{(k\pm m\Delta - u\delta)(k\pm m\Delta - u\delta+1)}{2}+qk\right)\right\} \times Const \qquad \cdots$$

$$when\ N\ is\ odd, k=0,1,...,N-1$$

$(\mathrm{E\,q\,u\,a\,t\,i\,o\,n\ \ 3\,3})$

Equation 33 is equivalent to a ZC sequence acquired by applying cyclic shift corresponding to the frequency difference $\delta$ between the reference point and the transmission band of the reference signal, to the ZC sequence of equation 32 in the time domain. Therefore, cyclic shift applying section 201 applies cyclic shift ($-u\delta$) to the ZC sequence of equation 32 in the time domain.

In this way, according to Embodiment 7, by applying cyclic shift corresponding to a frequency difference $\delta$ between the reference point and transmission band of a reference signal, to a ZC sequence in the time domain, it is possible on the receiving side to make interference wave peaks from neighboring cells appear outside detection windows for desired wave peaks and separate cell-specific signals, so that it is possible to improve channel estimation precision.

Further, although the present embodiment has been explained assuming that reference signal generating section 108 in terminal 200 is as shown in FIG.14, the configurations shown in FIG.15A to C may be possible. FIG.15A shows a configuration where the cyclic shift applying section and cyclic shift section are arranged before a DFT section and the cyclic shift applying section applies cyclic shift corresponding to the frequency difference $\delta$ between the reference point and the transmission band of the reference signal, to the ZC sequence in the time domain. Further, two of the cyclic shift applying section and cyclic shift section may not be configured to perform phase rotation separately. For example, one cyclic shift section may be configured to apply cyclic shift in the time domain based on the sum of the amount of cyclic shift matching the amount of phase rotation and the amount of cyclic shift corresponding to the frequency difference $\delta$ between the reference point and the transmission band of the reference signal.

Further, a configuration is also possible as shown in FIG.15B where a cyclic shift section and cyclic shift applying section are arranged after an IFFT section, and a configuration is also possible as shown in FIG.15C where a cyclic shift section is arranged before a DFT section and a cyclic shift applying section is arranged after an IFFT section. Furthermore, a configuration is also possible where a cyclic shift applying section is arranged before a DFT section and a cyclic shift section is arranged after an IFFT section. Here, if a cyclic shift applying section is arranged after an IFFT section, cyclic shift corresponding to the frequency difference $\delta$ is changed to the amount of cyclic shift for performing over-sampling, and is applied to an input signal in the time domain. Further, the order of the cyclic shift applying section and cyclic shift section may be altered in the above configuration. These configurations can also make interference wave peaks appear outside detection windows for desired wave peaks.

(Embodiment 8)

A case will be explained with Embodiment 8 of the present invention where the cyclic shift corresponding to the frequency difference $\delta$ between the reference point and the transmission band of the reference signal, is applied to the ZC sequence in the frequency domain. Further, the configuration of the base station according to Embodiment 8 of the present invention is the same as the configuration of Embodiment 6 shown in FIG.9, and therefore the detailed explanation thereof will be omitted.

The configuration of terminal 300 according to Embodiment 8 of the present invention will be explained using FIG.16. FIG.16 differs from FIG.7 in changing phase rotation applying section 110 to cyclic shift applying section 301.

Cyclic shift applying section 301 applies cyclic shift corresponding to the frequency difference $\delta$ between the reference point and the transmission band of the reference signal, to the ZC sequence outputted from DFT section 109, and outputs the ZC sequence, to which the cyclic shift is applied, to mapping section 111.

Here, following equation 34 is derived by transforming above equation 4.

[34]

$$F_{u,m}(k+\delta) = \exp\left\{\frac{-j2\pi u}{N}\left(\frac{(k+\delta)(k+\delta+1)}{2}+qk\right)\pm\frac{j2\pi\Delta m}{N}k\right\}\times Const \quad \ldots \text{(Equation 34)}$$

Above equation 34 is equivalent to the ZC sequence acquired by applying the amount of cyclic shift corresponding to the frequency difference $\delta$, to the ZC sequence represented by above equation 4, in the frequency domain. That is, the essential requirement is that the amount of cyclic shift corresponding to the frequency difference $\delta$ is applied to the ZC sequence represented by above equation 4 and the ZC sequence is transmitted. Further, cyclic shift applying section 301 applies the cyclic shift ($\delta$) to the ZC sequence in the frequency domain.

In this way, according to Embodiment 8, by applying cyclic shift corresponding to the frequency difference $\delta$ between the reference point and transmission band of a reference signal, to a ZC sequence in the frequency domain, it is possible on the receiving side to make interference wave peaks from neighboring cells appear outside detection windows for desired wave peaks and separate cell-specific signals, so that it is possible to improve channel estimation precision.

(Embodiment 9)

A case will be explained now with Embodiment 9 of the present invention where phase rotation corresponding to the frequency difference $\delta$ between the reference point and the transmission band of the reference signal, is applied to the ZC sequence in the time domain. Here, the configuration of the base station according to Embodiment 9 of the present invention is the same as the configuration shown in FIG.9 of Embodiment 7, and therefore detailed explanation thereof will be omitted.

The configuration of terminal 400 according to Embodiment 9 of the present invention will be explained using FIG.17. FIG.17 differs from FIG.14 in changing cyclic shift applying section 201 to phase rotation applying section 401.

Phase rotation applying section 401 applies phase rotation corresponding to the frequency difference $\delta$ between the reference point and the transmission band of the reference signal, to the ZC sequence, and outputs the ZC sequence, to which phase rotation is applied, to DFT section 109.

Here, following equation 35 can be derived by transforming equation 34 described in Embodiment 8.

[35]

$$f_{r,m}(k,\delta) = \exp\left\{\frac{-j2\pi r}{N}\left(\frac{(k\pm m\Delta)(k\pm m\Delta+1)}{2}+qk\right)\right\}\times\exp\left\{\frac{-j2\pi r}{N}(-ku\delta)\right\}\times Const \quad \ldots \text{(Equation}$$

$$35)$$

Above equation 35 is equivalent to the ZC sequence acquired by applying phase rotation corresponding to the frequency difference $\delta$, to the ZC sequence in the time domain. Therefore, phase rotation applying section 401 applies phase rotation corresponding to the frequency difference $\delta$, to the ZC sequence in the time domain. That is, as shown in following equation 36, phase rotation is applied to the ZC sequence of above equation 32 in the time domain, and the ZC sequence is transmitted.

[36]

$$f_{r,m}(k,0)\times\exp\left\{\frac{-j2\pi r}{N}\left(-ku\delta\right)\right\} \quad \ldots \quad (\mathrm{Equation}\ 36)$$

In this way, according to Embodiment 9, by applying phase rotation corresponding to the frequency difference $\delta$ between the reference point and the transmission band of the reference signal, to the ZC sequence in the time domain, it is possible on the receiving side to make interference wave peaks from neighboring cells appear outside detection windows for desired wave peaks and separate cell-specific signals, so that it is possible to improve channel estimation precision.

Furthermore, with the above embodiments, even in case of the same sequence length u1/N1=u2/N2, it is possible to improve channel estimation precision. For example, assuming a case where the same sequence length of the same sequence number is used in a plurality of cells in which frame synchronization is established and different cyclic shift sequences are used in each cell, the base station performs scheduling on a per cell basis and allocates frequency resources to each terminal and, therefore, as shown in FIG.26, there is a high possibility that ZC sequences are transmitted in different transmission bands in neighboring cells. As a result, interference wave peaks appear in different positions and, if these peaks move in detection windows for desired waves, channel estimation precision deteriorates. In such a case, by using the above embodiments, interference wave peaks are prevented from appearing in detection windows for desired waves, so that it is possible to improve channel estimation precision.

Further, although cases have been explained with the above embodiments where the common reference point is set in all cells in which frame synchronization is established, the present invention is not limited to this, and the common reference point may be set in cells in which frame synchronization is not established. Furthermore, regardless of the minimum transmission bandwidth and so on supported by each terminal, the common reference point may be set in all cells in which frame synchronization is established as well as in each transmission bandwidth.

As shown in FIG.27A, this reference point may be a DC component subcarrier in a system transmission bandwidth or, as shown in FIG.27B, may be a subcarrier at one end of a system transmission bandwidth (for example, 20MHz). Further, in this case, terminals that do not support the system transmission band (20MHz) use the subcarrier at one end of the system transmission bandwidth (20MHz) as the reference point.

Further, although cases have been explained with the above embodiments where a method of allocating different cyclic shift sequences (m) of the same sequence number (u) between cells in which frame synchronization is established (for example, cells that belong to the same base station) and a grouping method of allocating sequences of high cross-correlation to the same cell are combined, the present invention is not limited to this, and the present invention is also applicable to cases where sequence numbers of high cross-correlation are used in cells in which frame synchronization is established.

Furthermore, phase rotation or cyclic shift corresponding to the frequency difference $\delta$ between the reference point and transmission band in the above embodiments may be set in the term of qk for the ZC sequence. To be more specific, by using the phase rotation term added in the above embodiments as the term of qk in above equation 4, following equation 37 is given.

[37]

$$F_{u,m}(k)=\exp\left\{\frac{-j2\pi u}{N}\left(\frac{k(k+1)}{2}+k\delta\right)\pm\frac{j2\pi\Delta m}{N}k\right\},\ when\ N\ is\ odd,\ k=0,1,...,N-1 \quad \ldots \quad (\mathrm{Equation}$$

$$37)$$

Further, it is possible to generate a ZC sequence using an adequate term of qk and then apply phase rotation or cyclic shift to this ZC sequence as described in Embodiments 5 to 9, or it is also possible to apply phase rotation or cyclic shift to qk as described in Embodiments 5 to 9 upon generation of a ZC sequence Furthermore, a ZC sequence may be represented by following equation 38.

[38]

$$F_{u,m}(k) = \exp\left\{ \frac{-j2\pi u}{N}\left( \frac{(k \pm m)(k \pm m + 1)}{2} + k\,\delta \right) \right\}, \quad when\ N\ is\ odd,\ k = 0,1,...,N-1 \quad \cdots \quad (\text{Equation } 38)$$

Still further, above equation 35 may be used in the form of following equation 39. [39]

$$f_{r,m}(k,\delta) = \exp\left\{ \frac{-j2\pi r}{N}\left( \frac{(k \pm m\Delta)(k \pm m\Delta + 1)}{2} + (-u\,\delta)k \right) \right\}, \quad when\ N\ is\ odd,\ k = 0,1,...,N \quad \cdots \quad (\text{Equation } 39)$$

In the above embodiments, as shown in the above equation, the reference signal generating section of a terminal generates a reference signal represented as a ZC sequence. The reference signal to be generated is a ZC sequence represented by four variables of the sequence length N determined according to the transmission bandwidth, the sequence number allocated to each cell (the sequence number u in the frequency domain or the sequence number r in the time domain), the amount of cyclic shift $\Delta m$ allocated to each cell, and $\delta$ determined according to the transmission band. In this way, each terminal can maintain the relative relationships with reference signals transmitted from other terminals by generating the ZC sequence using the transmission bandwidth (i.e. sequence length), the transmission band (i.e. the frequency difference from the reference point), the sequence number and the amount of cyclic shift, so that it is possible to improve channel estimation precision in the base station.

Further, there are cases where above equation 4 is represented by following equation 40.
[40]

$$F_{u,m}(k) = \exp\left\{ \frac{j2\pi u}{N}\left( \frac{k(k+1)}{2} + qk \right) \pm \frac{j2\pi\Delta m}{N}k \right\}, \quad when\ N\ is\ odd,\ k = 0,1,...,N-1 \quad \cdots \quad (\text{Equation } 40)$$

In this case, above equation 29 is represented by following equation 41.
[41]

$$F_{u,m}(k+\delta) = \exp\left\{ \frac{j2\pi u}{N}\left( \frac{k(k+1)}{2} + qk \right) \pm \frac{j2\pi\Delta m}{N}k \right\} \times \exp\left\{ \frac{j2\pi u}{N}\left( \frac{\delta(\delta+1)}{2} + q\delta \right) \pm \frac{j2\pi\Delta m}{N}\delta \right\} \times \exp\left\{ \frac{j2\pi u}{N}(k\delta) \right\}$$

$$\cdots \quad (\text{Equation } 41)$$

That is, in case of Embodiment 6, phase rotation is applied to above equation 40 and equation 40 is transmitted.
[42]

$$F_{u,m}(k) \times \exp\left\{ \frac{j2\pi u}{N}(k\delta) \right\} \quad \cdots \quad (\text{Equation } 42)$$

Further, above equation 32 and above equation 33 are represented by following equation 43 and equation 44, respectively, and cyclic shift $(-u\delta)$ is applied to ZC sequence of equation 43 in the time domain and ZC sequence of equation 43 is transmitted.
[43]

$$f_{r,m}(k,0) = \exp\left\{\frac{2\pi r}{N}\left(\frac{(k \pm m\Delta)(k \pm m\Delta + 1)}{2} + qk\right)\right\}, when\ N\ is\ odd, k = 0,1,...,N-1 \qquad \cdots$$

（Ｅｑｕａｔｉｏｎ　４３）

[44]

$$f_{r,m}(k,\delta) = \exp\left\{\frac{2\pi r}{N}\left(\frac{(k \pm m\Delta - u\delta)(k \pm m\Delta - u\delta + 1)}{2} + qk\right)\right\} \times Const \qquad \cdots$$

$$when\ N\ is\ odd, k = 0,1,...,N-1$$

（Ｅｑｕａｔｉｏｎ　４４）

Furthermore, above equation 34 is represented by following equation 45, and applies cyclic shift ($\delta$) to the ZC sequence of above equation 40 in the frequency domain and is transmitted.

[45]

$$F_{u,m}(k+\delta) = \exp\left\{\frac{j2\pi u}{N}\left(\frac{(k+\delta)(k+\delta+1)}{2} + qk\right) \pm \frac{j2\pi\Delta m}{N}k\right\} \times Const \quad \cdots \ (\mathrm{E\,q\,u\,a\,t\,i\,o\,n}\ 4\,5)$$

Still further, above equation 35 is represented by following equation 46, and applies phase rotation to the ZC sequence of above equation 43 as in equation 47 and is transmitted.

[46]

$$f_{r,m}(k,\delta) = \exp\left\{\frac{j2\pi r}{N}\left(\frac{(k \pm m\Delta)(k \pm m\Delta + 1)}{2} + qk\right)\right\} \times \exp\left\{\frac{j2\pi r}{N}(-ku\delta)\right\} \times Const \quad \cdots \ (\mathrm{E\,q\,u\,a\,t\,i\,o\,n}\ 4\,6)$$

[47]

$$f_{r,m}(k,0) \times \exp\left\{\frac{j2\pi r}{N}(-ku\delta)\right\} \quad \cdots \ (\mathrm{E\,q\,u\,a\,t\,i\,o\,n}\ 4\,7)$$

Also, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

Industrial Applicability

The wireless communication terminal apparatus, wireless communication base station apparatus and wireless communication method according to the present invention can prevent interference wave peaks from appearing in assigned cell-specific detection windows for cyclic shift sequences and improve channel estimation precision in a base station, and are applicable for example, to a mobile communication system.

**Claims**

1. A wireless communication terminal apparatus (100) comprising:

   an applying section (110) adapted to apply to a sequence used as a reference signal, one of phase rotation and cyclic shift corresponding to a frequency difference between a frequency set in advance and a transmission band of the reference signal, the sequence consisting in one of a constant amplitude and zero auto-correlation code sequence that uses cyclic shift sequences and a Zadoff-Chu sequence with a determined cyclic shift value; and
   a transmitting section (115) adapted to transmit the reference signal to which one of phase rotation and cyclic shift is applied.

2. The wireless communication terminal apparatus (100) according to claim 1, wherein the applying section (110) is adapted to apply said one of phase rotation and cyclic shift, to the sequence in a frequency domain.

3. The wireless communication terminal apparatus (100) according to claim 1, wherein the applying section (110) is adapted to apply said one of phase rotation and cyclic shift to the sequence in a time domain.

4. A wireless communication base station apparatus (150) comprising:

   a dividing section (160) adapted to divide a reference signal included in a received signal using a sequence, to which one of phase rotation and cyclic shift corresponding to a frequency difference between a frequency set in advance and a transmission band of the reference signal allocated to a wireless communication terminal apparatus is applied, to calculate a correlation value, the sequence consisting in one of a constant amplitude and zero auto-correlation code sequence that uses cyclic shift sequences and a Zadoff-Chu sequence with a determined cyclic shift value; and
   an extracting section (162) adapted to extract a correlation value in a period in which a correlation value of a desired sequence is present, from the calculated correlation value.

5. A wireless communication method comprising:

   applying, to a sequence used as a reference signal, one of phase rotation and cyclic shift corresponding to a frequency difference between a frequency set in advance and a transmission band of the reference signal the sequence consisting in one of a constant amplitude and zero auto-correlation code sequence and a Zadoff-Chu sequence with a determined cyclic shift value;
   transmitting the reference signal to which said one of phase rotation and cyclic shift is applied .

6. A wireless communication method comprising:

   dividing a reference signal included in a received signal using a sequence, to which one of phase rotation and cyclic shift corresponding to a frequency difference between a frequency set in advance and a transmission band of the reference signal allocated to a wireless communication terminal apparatus is applied, to calculate a correlation value, the sequence consisting in one of a constant amplitude and zero auto-correlation code sequence and a Zadoff-Chu sequence with a determined cyclic shift value; and
   extracting a correlation value in a period in which a correlation value of a desired sequence is present, from the calculated correlation value.

**Patentansprüche**

1.  Drahtloses Kommunikationsendgerät (100), das umfasst:

    einen Anwendungsabschnitt (110), der dazu eingerichtet ist, auf eine als Referenzsignal verwendete Sequenz eine Phasendrehung oder eine zyklische Verschiebung entsprechend einer Frequenzdifferenz zwischen einer im Voraus eingestellten Frequenz und einem Übertragungsfrequenzband des Referenzsignals anzuwenden, wobei die Sequenz aus einer Sequenz mit einer konstanten Amplitude und einem Null-Autokorrelationscode (CAZAC), die zyklische Verschiebungssequenzen verwendet, oder aus einer Zadoff-Chu-Sequenz mit einem bestimmten zyklischen Verschiebungswert besteht; und
    einen Sendeabschnitt (115), der dazu eingerichtet ist, das Referenzsignal zu senden, auf das entweder eine Phasendrehung oder eine zyklische Verschiebung angewendet wird.

2.  Drahtloses Kommunikationsendgerät (100) nach Anspruch 1, wobei der Anwendungsabschnitt (110) dazu eingerichtet ist, auf die Sequenz in einem Frequenzbereich die besagte Phasendrehung oder die besagte zyklische Verschiebung anzuwenden.

3.  Drahtloses Kommunikationsendgerät (100) nach Anspruch 1, wobei der Anwendungsabschnitt (110) dazu eingerichtet ist, auf die Sequenz in einem Zeitbereich die besagte Phasendrehung oder die besagte zyklische Verschiebung anzuwenden.

4.  Drahtlose Kommunikationsbasisstation (150), die umfasst:

    einen Teilungsabschnitt (160), der dazu eingerichtet ist, ein in einem empfangenen Signal enthaltenes Referenzsignal unter Verwendung einer Sequenz zu teilen, auf welche eine Phasendrehung oder eine zyklische Verschiebung entsprechend einer Frequenzdifferenz zwischen einer im Voraus eingestellten Frequenz und einem Übertragungsfrequenzband des einem drahtlosen Kommunikationsendgerät zugeordneten Referenzsignals angewendet wurde, um einen Korrelationswert zu berechnen, wobei die Sequenz aus einer Sequenz mit einer konstanten Amplitude und einem Null-Autokorrelationscode (CAZAC), die zyklische Verschiebungssequenzen verwendet, oder aus einer Zadoff-Chu-Sequenz mit einem bestimmten zyklischen Verschiebungswert besteht; und
    einen Extraktionsabschnitt (162), der dazu eingerichtet ist, einen Korrelationswert in einer Periode, in der ein Korrelationswert einer erwünschten Sequenz vorhanden ist, aus dem berechneten Korrelationswert zu extrahieren.

5.  Drahtloses Kommunikationsverfahren, das umfasst:

    Anwenden, auf eine als Referenzsignal verwendete Sequenz, entweder einer Phasendrehung oder einer zyklischen Verschiebung entsprechend einer Frequenzdifferenz zwischen einer im Voraus eingestellten Frequenz und einem Übertragungsfrequenzband des Referenzsignals, wobei die Sequenz aus einer Sequenz mit einer konstanten Amplitude und einem Null-Autokorrelationscode (CAZAC), die zyklische Verschiebungssequenzen verwendet, oder aus einer Zadoff-Chu-Sequenz mit einem bestimmten zyklischen Verschiebungswert besteht; Senden des Referenzsignals, auf das die besagte Phasendrehung oder die besagte zyklische Verschiebung angewendet wurde.

6.  Drahtloses Kommunikationsverfahren, das umfasst:

    Teilen eines in einem empfangenen Signal enthaltenen Referenzsignals unter Verwendung einer Sequenz, auf welche eine Phasendrehung oder eine zyklische Verschiebung entsprechend einer Frequenzdifferenz zwischen einer im Voraus eingestellten Frequenz und einem Übertragungsfrequenzband des einem drahtlosen Kommunikationsendgerät zugeordneten Referenzsignals angewendet wurde, um einen Korrelationswert zu berechnen, wobei die Sequenz aus einer Sequenz mit einer konstanten Amplitude und einem Null-Autokorrelationscode (CAZAC), die zyklische Verschiebungssequenzen verwendet, oder aus einer Zadoff-Chu-Sequenz mit einem bestimmten zyklischen Verschiebungswert besteht; und
    Extrahieren eines Korrelationswerts in einer Periode, in der ein Korrelationswert einer erwünschten Sequenz vorhanden ist, aus dem berechneten Korrelationswert.

**Revendications**

1. Appareil terminal de communication sans fil (100) comprenant :

   une section d'application (110) conçue pour appliquer sur une séquence utilisée comme signal de référence l'un d'une rotation de phase et d'un décalage cyclique correspondant à une différence de fréquences entre une fréquence établie à l'avance et une bande de transmission du signal de référence, la séquence consistant en l'une d'une séquence de code d'auto corrélation nulle d'amplitude constante qui utilise des séquences de décalages cycliques et d'une séquence de Zadoff - Chu présentant une valeur de décalage cyclique déterminé, et une section d'émission (115) conçue pour transmettre le signal de référence à celui sur lequel l'un d'une rotation de phase et d'un décalage cyclique est appliqué.

2. Appareil terminal de communication sans fil (100) selon la revendication 1, dans lequel la section d'application (110) est conçue pour appliquer ledit l'un d'une rotation de phase et d'un décalage cyclique à la séquence dans le domaine des fréquences.

3. Appareil terminal de communication sans fil (100) selon la revendication 1, dans lequel la section d'application (110) est conçue pour appliquer ledit l'un d'une rotation de phase et d'un décalage cyclique à la séquence dans le domaine du temps.

4. Station de base de communication sans fil (150) comprenant :

   une section de division (160) conçue pour diviser un signal de référence inclus dans un signal reçu en utilisant une séquence, à celui d'une rotation de phase et d'un décalage cyclique correspondant à une différence de fréquences entre une fréquence établie à l'avance et une bande de transmissions du signal de référence allouée à un terminal de communication sans fil, est appliquée, afin de calculer une valeur de corrélation, la séquence consistant en l'une d'une séquence de code d'auto corrélation nulle d'amplitude constante qui utilise des séquences de décalages cycliques et d'une séquence de Zadoff - Chu présentant une valeur de décalage cyclique déterminé, et une section d'extraction (162) conçue pour extraire à partir de la valeur de corrélation calculée une valeur de corrélation dans une période dans laquelle une valeur de corrélation appartenant à une séquence désirée est présente.

5. Procédé de communication sans fil comprenant :

   l'application, à une séquence utilisée comme signal de référence, de l'une d'une rotation de phase et d'un décalage cyclique correspondant à une différence de fréquences entre une fréquence établie à l'avance et une bande de transmissions du signal de référence, la séquence consistant en l'une d'une séquence de code d'auto corrélation nulle d'amplitude constante qui utilise des séquences de décalages cycliques et d'une séquence de Zadoff - Chu présentant une valeur de décalage cyclique, l'émission du signal de référence sur lequel ledit l'un d'une rotation de phase et d'un décalage cyclique est appliqué.

6. Procédé de communication sans fil comprenant :

   la division d'un signal de référence inclus dans un signal reçu en utilisant une séquence à l'un d'une rotation de phase et d'un décalage cyclique correspondant à une différence de fréquences entre une fréquence établie à l'avance et une bande de transmission du signal de référence allouée à un terminal de communication sans fil est appliquée, afin de calculer une valeur de corrélation, la séquence consistant en l'une d'une séquence de code d'auto corrélation nulle d'amplitude constante qui utilise des séquences de décalages cycliques et d'une séquence de Zadoff - Chu présentant une valeur de décalage cyclique, et l'extraction à partir de la valeur de corrélation calculée d'une valeur de corrélation dans une période dans laquelle une valeur de corrélation appartenant à une séquence désirée est présente.

FIG.1

FIG.2

FIG.3

| NUMBER OF RB's (BANDWIDTH) | CELL #1 |
|---|---|
| 1 (N=11) | u=3 |
| 2 (N=23) | u=6 |
| . | . |
| | |
| . | . |
| | |
| . | . |
| 10 (N=113) | u=31 |

SEQUENCES OF HIGHER CORRELATION = RATIO OF u TO N IS CLOSE

FIG.4

| NUMBER OF RB's (BANDWIDTH) | CELL #1 | CELL #2 | CELL #3 |
|---|---|---|---|
| 1 | u=3, m=1,2 | u=3, m=3,4 | u=3, m=5,6 |
| 2 | u=6, m=1,2 | u=6, m=3,4 | u=6, m=5,6 |
| . | . | . | . |
| | | | |
| . | . | . | . |
| | | | |
| . | . | . | . |
| 10 | u=31, m=1,2 | u=31, m=3,4 | u=31, m=5,6 |

FIG.5

FIG.6

FIG.7

δ SUBCARRIERS

REFERENCE SIGNAL

FREQUENCY

REFERENCE POINT

FIG.8

EP 2 141 841 B1

FIG.9

EP 2 141 841 B1

EP 2 141 841 B1

BAND IN WHICH CORRELATION IS
CALCULATED IN CELL #1 (360kHz)

CELL #1
TRANSMISSION SIGNAL
(u1, N1, M1)

δ1 SUBCARRIERS

| F (1) | F (2) | ····· | F (12) | F (13) | F (14) | ····· | F (1) |

CELL #2
TRANSMISSION SIGNAL
(u2, N2, M2)

δ2 SUBCARRIERS

| F (1) | F (2) | ····· | F (11) | F (1) |

FREQUENCY

REFERENCE POINT

FIG.10

FIG.11

EP 2 141 841 B1

EP 2 141 841 B1

BAND IN WHICH CORRELATION IS
CALCULATED IN CELL #1 (360kHz)

CELL #1
TRANSMISSION
SIGNAL
(u1, N1, m1)

δ1 SUBCARRIERS

| F (1) | F (2) | · · · · · | F (12) | F (13) | F (14) | · · · · · | F (23) | F (1) |

CELL #2
TRANSMISSION
SIGNAL
(u2, N2, m2)

δ2 SUBCARRIERS

| F (1) | F (2) | · · · · · | F (47) | F (1) |

FREQUENCY

FIG.12

108 : REFERENCE SIGNAL GENERATING SECTION

ZC SEQUENCE → DFT SECTION → PHASE ROTATION APPLYING SECTION → PHASE ROTATION SECTION → MAPPING SECTION → IFFT SECTION →

FIG.13A

108 : REFERENCE SIGNAL GENERATING SECTION

ZC SEQUENCE → CYCLIC SHIFT SECTION → DFT SECTION → PHASE ROTATION APPLYING SECTION → MAPPING SECTION → IFFT SECTION →

FIG.13B

FIG.14

108 : REFERENCE SIGNAL GENERATING SECTION

ZC
SEQUENCE

| 112 | | | 110 | 111 |

CYCLIC SHIFT APPLYING SECTION → CYCLIC SHIFT SECTION → DFT SECTION → MAPPING SECTION → IFFT SECTION →

FIG.15A

108 : REFERENCE SIGNAL GENERATING SECTION

ZC
SEQUENCE

| 110 | 111 | 112 |

DFT SECTION → MAPPING SECTION → IFFT SECTION → CYCLIC SHIFT SECTION → CYCLIC SHIFT APPLYING SECTION →

FIG.15B

108 : REFERENCE SIGNAL GENERATING SECTION

ZC
SEQUENCE

| 112 | | 110 | 111 |

CYCLIC SHIFT SECTION → DFT SECTION → MAPPING SECTION → IFFT SECTION → CYCLIC SHIFT APPLYING SECTION →

FIG.15C

FIG.16

FIG.17

FIG.18

108 : REFERENCE SIGNAL GENERATING SECTION

ZC
SEQUENCE → DFT SECTION → PHASE ROTATION APPLYING SECTION → CYCLIC EXTENSION SECTION (TRUNCATION SECTION) → PHASE ROTATION SECTION → MAPPING SECTION → IFFT SECTION →

FIG.19A

108 : REFERENCE SIGNAL GENERATING SECTION

ZC
SEQUENCE → DFT SECTION → CYCLIC EXTENSION SECTION (TRUNCATION SECTION) → PHASE ROTATION APPLYING SECTION → PHASE ROTATION SECTION → MAPPING SECTION → IFFT SECTION →

FIG.19B

108 : REFERENCE SIGNAL GENERATING SECTION

ZC SEQUENCE → DFT SECTION → CYCLIC EXTENSION SECTION (TRUNCATION SECTION) → PHASE ROTATION APPLYING SECTION → MAPPING SECTION → IFFT SECTION → CYCLIC SHIFT SECTION →

FIG.20A

108 : REFERENCE SIGNAL GENERATING SECTION

ZC SEQUENCE → DFT SECTION → PHASE ROTATION APPLYING SECTION → CYCLIC EXTENSION SECTION (TRUNCATION SECTION) → MAPPING SECTION → IFFT SECTION → CYCLIC SHIFT SECTION →

FIG.20B

108 : REFERENCE SIGNAL GENERATING SECTION

ZC SEQUENCE → CYCLIC SHIFT SECTION → DFT SECTION → CYCLIC EXTENSION SECTION (TRUNCATION SECTION) → PHASE ROTATION APPLYING SECTION → MAPPING SECTION → IFFT SECTION →

FIG.20C

108 : REFERENCE SIGNAL GENERATING SECTION

ZC SEQUENCE → CYCLIC SHIFT SECTION → DFT SECTION → PHASE ROTATION APPLYING SECTION → CYCLIC EXTENSION SECTION (TRUNCATION SECTION) → MAPPING SECTION → IFFT SECTION →

FIG.20D

EP 2 141 841 B1

TRANSMISSION BAND (24 SUBCARRIERS)

FREQ.

TRUNCATION

ZC SEQUENCE (SEQUENCE LENGTH N=29)

FIG.21

ZC SEQUENCE → CYCLIC SHIFT APPLYING SECTION (201) → DFT SECTION (109) → CYCLIC EXTENSION SECTION (TRUNCATION SECTION) → MAPPING SECTION (111) → IFFT SECTION (112) → CYCLIC SHIFT SECTION (113) → [108]

**FIG.22A**

108 : REFERENCE SIGNAL GENERATING SECTION

ZC SEQUENCE → CYCLIC SHIFT APPLYING SECTION → CYCLIC SHIFT SECTION (112) → DFT SECTION → CYCLIC EXTENSION SECTION (TRUNCATION SECTION) → MAPPING SECTION (110) → IFFT SECTION (111)

**FIG.22B**

108 : REFERENCE SIGNAL GENERATING SECTION

ZC SEQUENCE → DFT SECTION → MAPPING SECTION (110) → CYCLIC EXTENSION SECTION (TRUNCATION SECTION) → IFFT SECTION (111) → CYCLIC SHIFT SECTION (112) → CYCLIC SHIFT APPLYING SECTION

**FIG.22C**

108 : REFERENCE SIGNAL GENERATING SECTION

ZC SEQUENCE → CYCLIC SHIFT SECTION (112) → DFT SECTION → CYCLIC EXTENSION SECTION (TRUNCATION SECTION) → MAPPING SECTION (110) → IFFT SECTION (111) → CYCLIC SHIFT APPLYING SECTION

**FIG.22D**

108 : REFERENCE SIGNAL GENERATING SECTION

ZC SEQUENCE → DFT SECTION → CYCLIC SHIFT APPLYING SECTION → CYCLIC EXTENSION SECTION (TRUNCATION SECTION) → PHASE ROTATION SECTION → MAPPING SECTION → IFFT SECTION →

**FIG.23A**

108 : REFERENCE SIGNAL GENERATING SECTION

ZC SEQUENCE → DFT SECTION → CYCLIC EXTENSION SECTION (TRUNCATION SECTION) → CYCLIC SHIFT APPLYING SECTION → PHASE ROTATION SECTION → MAPPING SECTION → IFFT SECTION →

**FIG.23B**

108 : REFERENCE SIGNAL GENERATING SECTION

ZC SEQUENCE → DFT SECTION → CYCLIC EXTENSION SECTION (TRUNCATION SECTION) → CYCLIC SHIFT APPLYING SECTION → MAPPING SECTION → IFFT SECTION → CYCLIC SHIFT SECTION →

FIG.24A

108 : REFERENCE SIGNAL GENERATING SECTION

ZC SEQUENCE → DFT SECTION → CYCLIC SHIFT APPLYING SECTION → CYCLIC EXTENSION SECTION (TRUNCATION SECTION) → MAPPING SECTION → IFFT SECTION → CYCLIC SHIFT SECTION →

FIG.24B

108 : REFERENCE SIGNAL GENERATING SECTION

ZC SEQUENCE → CYCLIC SHIFT SECTION → DFT SECTION → CYCLIC EXTENSION SECTION (TRUNCATION SECTION) → CYCLIC SHIFT APPLYING SECTION → MAPPING SECTION → IFFT SECTION →

FIG.24C

108 : REFERENCE SIGNAL GENERATING SECTION

ZC SEQUENCE → CYCLIC SHIFT SECTION → DFT SECTION → CYCLIC SHIFT APPLYING SECTION → CYCLIC EXTENSION SECTION (TRUNCATION SECTION) → MAPPING SECTION → IFFT SECTION →

FIG.24D

108 : REFERENCE SIGNAL GENERATING SECTION

ZC
SEQUENCE →
| PHASE ROTATION APPLYING SECTION | → | DFT SECTION | → | CYCLIC EXTENSION SECTION (TRUNCATION SECTION) |

401    109

| MAPPING SECTION | → | IFFT SECTION | → | CYCLIC SHIFT SECTION | →

111    112    113

**FIG.25A**

108 : REFERENCE SIGNAL GENERATING SECTION

ZC
SEQUENCE →
| PHASE ROTATION APPLYING SECTION | → | CYCLIC SHIFT SECTION | → | DFT SECTION |

112

| CYCLIC EXTENSION SECTION (TRUNCATION SECTION) | → | MAPPING SECTION | → | IFFT SECTION | →

110    111

**FIG.25B**

108 : REFERENCE SIGNAL GENERATING SECTION

ZC
SEQUENCE →
| DFT SECTION | → | CYCLIC EXTENSION SECTION (TRUNCATION SECTION) | → | MAPPING SECTION |

110

| IFFT SECTION | → | CYCLIC SHIFT SECTION | → | PHASE ROTATION APPLYING SECTION | →

111    112

**FIG.25C**

108 : REFERENCE SIGNAL GENERATING SECTION

ZC
SEQUENCE →
| CYCLIC SHIFT SECTION | → | DFT SECTION | → | CYCLIC EXTENSION SECTION (TRUNCATION SECTION) |

112

| MAPPING SECTION | → | IFFT SECTION | → | PHASE ROTATION APPLYING SECTION | →

110    111

**FIG.25D**

FIG.26

SYSTEM BANDWIDTH
(1.25/2.5/5/10/15/20MHz)

1RB

DC

1RB

FREQUENCY

REFERENCE POINT

FIG.27A

SYSTEM BANDWIDTH
(20MHz)

1RB

DC

FREQUENCY

REFERENCE POINT

FIG.27B

EP 2 141 841 B1

SYSTEM BANDWIDTH
(1.25/2.5/5/10/15/20MHz)

1RB

1RB

DC

FREQ.

REFERENCE POINT

1RB (12 SUB-CARRIERS)

$f_1$ $f_2$ $f_3$ $f_4$ $f_5$ $f_6$ $f_7$ $f_8$ $f_9$ $f_{10}$ $f_{11}$ $f_{12}$ $f_{13}$ $f_{14}$ $f_{15}$ $f_{16}$ $f_{17}$ $f_{18}$ $f_{19}$ $f_{20}$ $f_{21}$ $f_{22}$ $f_{23}$ $f_{24}$ $f_{25}$ $f_{26}$     $f_{12k-1}$ $f_{12k}$ $f_{12k+1}$     FREQ.

$C_1$ $C_2$ $C_3$ $C_4$ $C_5$ $C_6$ $C_7$ $C_8$ $C_9$ $C_{10}$ $C_{11}$ $C_{12}$ $C_{13}$ $C_{14}$ $C_{15}$ $C_{16}$ $C_{17}$ $C_{18}$ $C_{19}$ $C_{20}$ $C_{21}$ $C_{22}$ $C_{23}$ $C_1$ $C_2$ $C_3$

ZC SEQUENCE LENGTH N=23(2RB'S)

REPEATING

$C_{12k-1\,mod(23)}$    $C_{12k\,mod(23)}$    $C_{12k+1\,mod(23)}$

FIG.28A

FIG.28B

FIG.29A

FIG.29B

| SUBCARRIER NUMBER | COEFFICIENTS OF ZC SEQUENCE (N=23) |
|---|---|
| $f_1$ | $C_1$ |
| $f_2$ | $C_2$ |
| $f_3$ | $C_3$ |
| $\vert$ | $\vert$ |
| $f_{23}$ | $C_{23}$ |
| $f_{24}$ | $C_1$ |
| $f_{25}$ | $C_2$ |
| $\vert$ | $\vert$ |
| $f_{12k-1}$ | $C_{12k-1 \bmod (23)}$ |
| $f_{12k}$ | $C_{12k \bmod (23)}$ |
| $f_{12k+1}$ | $C_{12k+1 \bmod (23)}$ |
| $\vert$ | $\vert$ |

FIG.30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Uplink Reference Signal Multiplexing Structures for E-UTRA. *3GPP TSG RAN WG1Meeting #46bis,* 09 October 2006
- Narrow band uplink reference signal sequences and allocation for E-UTRA. *3GPP TSG RAN WG1Meeting #47,* 06 November 2006
- Sequence Assignment for Uplink Reference Signal. *3GPP TSG RAN WG1Meeting #47,* 06 November 2006
- Binding method for UL RS sequence with different lengths. *3GPP TSG RAN WG1Meeting #48,* 12 February 2007